(19) Europäisches Patentamt
European Patent Office
Office européen des brevets

(11) EP 3 699 246 A1

(12) **EUROPEAN PATENT APPLICATION**
published in accordance with Art. 153(4) EPC

(43) Date of publication:
**26.08.2020 Bulletin 2020/35**

(21) Application number: **18868913.7**

(22) Date of filing: **20.09.2018**

(51) Int Cl.:
***C09D 133/14*** *(2006.01)* ***B32B 27/00*** *(2006.01)*
***B32B 27/30*** *(2006.01)* ***C09D 5/28*** *(2006.01)*
***C09D 7/65*** *(2018.01)* ***C09D 125/02*** *(2006.01)*
***C09D 133/08*** *(2006.01)* ***C09D 175/04*** *(2006.01)*
***C09D 183/00*** *(2006.01)*

(86) International application number:
**PCT/JP2018/034737**

(87) International publication number:
**WO 2019/077930 (25.04.2019 Gazette 2019/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2017 JP 2017203043**

(71) Applicant: **Riken Technos Corporation**
**Tokyo 101-8336 (JP)**

(72) Inventor: **ITO, Shigekazu**
**Tokyo 101-8336 (JP)**

(74) Representative: **J A Kemp LLP**
**14 South Square**
**Gray's Inn**
**London WC1R 5JJ (GB)**

(54) **COATING MATERIAL FOR FORMING MATTE HARD COAT, AND DECORATIVE SHEET USING SAME**

(57) The present invention relates to a coating material including (A) 100 parts by mass of an acrylic-based curable resin, (B) 5-200 parts by mass of resin particles having an average particle diameter of 0.5-20 μm, (C) 0.05-20 parts by mass of a silicone/acrylic copolymer-based oil-repellent agent, and (D) 1-100 parts by mass of a compound having two or more isocyanate groups per molecule thereof. Preferably, the acrylic-based curable resin (A) may include structural units (a1) derived from a hydroxyl-group-containing (meth)acrylic acid ester, structural units (a2) derived from a vinyl aromatic compound, and structural units (a3) derived from a (meth)acrylic acid ester, and the acrylic-based curable resin (A) may include the structural units (a1) derived from a hydroxyl-group-containing (meth)acrylic acid ester in the amount of 5-40 mol% with respect to a total of 100 mol% of structural units derived from all the constituent monomers of the acrylic-based curable resin (A).

EP 3 699 246 A1

## Description

TECHNICAL FIELD

The present invention relates to a coating material. More specifically, the present invention relates to a coating material capable of forming a hard coat imparting a matte design (hereinafter, sometimes referred to as a "matte hard coat") and to a decorative sheet in which the coating material is used.

BACKGROUND ART

Conventionally, decorated articles whose surfaces are pasted with a decorative sheet and provided with a decorative makeup have been used. Examples of the articles include household appliances such as refrigerators, washing machines, air conditioners, mobile phones, and personal computers; furniture such as display cabinets, storage wardrobes, cupboards, and desks; substrates made of a wood-based material such as wood, plywood, laminated wood, a particle board, or a hard board as a building component of floors, walls, bathrooms, and the like; substrates made of a resin-based material such as polystyrene, an acrylonitrile/butadiene/styrene copolymer resin (ABS resin), polycarbonate, or polyester; and substrates made of a metal-based material such as iron or aluminum. In recent years, design has been increasingly emphasized as a point of differentiation of products. As a result, it has been proposed to impart a matte design to a decorative sheet by forming a hard coat on the surface layer of the decorative sheet from a coating material containing a matting agent (see, for example, Patent Literature 1). The technique is, however, disadvantageously insufficient in the stain resistance (or fouling resistance) and the abrasion resistance (or scratch resistance) of the hard coat, especially in the stain resistance. Furthermore, the technique is difficult to apply to a decorative makeup of an adherend having a complicated curved surface.

CITATION LIST

PATENT LITERATURE

PATENT LITERATURE 1: JP-A-2015-066731

SUMMARY OF INVENTION

TECHNICAL PROBLEM

An object of the present invention is to provide a coating material capable of forming a matte hard coat, and a decorative sheet having a matte design in which the coating material is used. A further object of the present invention is to provide a coating material capable of imparting a matte design and preferably forming a hard coat excellent in stain resistance (or fouling resistance), abrasion resistance (or scratch resistance), crack resistance, and bending resistance, and, using the coating material, to provide a decorative sheet that has a matte design and can be applied to a decorative makeup of an adherend having a complicated curved surface.

SOLUTION TO PROBLEM

Various aspects of the present invention for solving the problems described above are as follows.

[1]. A coating material comprising:

100 parts by mass of (A) an acrylic curable resin;
5 to 200 parts by mass of (B) resin particles having an average particle diameter of 0.5 to 20 $\mu$m;
0.05 to 20 parts by mass of (C) a silicone/acrylic copolymer oil-repellent agent; and
1 to 100 parts by mass of (D) a compound having two or more isocyanate groups per molecule.

[2]. The coating material according to the item [1], wherein the acrylic curable resin (A) comprises:

a structural unit derived from a hydroxyl-group-containing (meth)acrylic acid ester (a1);
a structural unit derived from a vinyl aromatic compound (a2); and
a structural unit derived from a (meth)acrylic acid alkyl ester (a3),
wherein the acrylic curable resin (A) comprises 5 to 40 mol% of the structural unit derived from a hydroxyl-group-containing (meth)acrylic acid ester (a1) based on 100 mol% of a total of the structural units derived from all constituent monomers.

[3]. The coating material according to the item [2], wherein the acrylic curable resin (A) comprises 10 to 50 mol% of the structural unit derived from a vinyl aromatic compound (a2) based on 100 mol% of the total of the structural units derived from all the constituent monomers.
[4]. The coating material according to the item [2] or [3], wherein the acrylic curable resin (A) comprises 20 to 85 mol% of the structural unit derived from a (meth)acrylic acid alkyl ester (a3) based on 100 mol% of the total of the structural units derived from all the constituent monomers.
[5]. The coating material according to any one of the items [1] to [4], wherein the acrylic curable resin (A) comprises:

a structural unit derived from a hydroxyl-group-containing (meth)acrylic acid ester (a1);
a structural unit derived from a vinyl aromatic compound (a2);
a structural unit derived from methacrylic acid methyl ester (a3-1); and
a structural unit derived from an aliphatic alkyl ester of a (meth)acrylic acid, the aliphatic alkyl moiety having 4 or more carbon atoms (a3-2).

[6]. The coating material according to the item [5], wherein the acrylic curable resin (A) comprises 10 to 50 mol% of the structural unit derived from methacrylic acid methyl ester (a3-1) based on 100 mol% of a total of the structural units derived from all constituent monomers.
[7]. The coating material according to the item [5] or [6], wherein the acrylic curable resin (A) comprises 5 to 40 mol% of the structural unit derived from an aliphatic alkyl ester of a (meth)acrylic acid, the aliphatic alkyl moeity having 4 or more carbon atoms (a3-2) based on 100 mol% of the total of the structural units derived from all the constituent monomers.
[8]. An article comprising a hard coat formed from the coating material according to any one of the items [1] to [7].
[9]. A decorative sheet comprising a hard coat formed from the coating material according to any one of the items [1] to [7].
[10]. A decorative sheet comprising:

a first hard coat; and a layer of a film substrate in order from a surface layer side,
wherein the first hard coat is formed from a coating material containing:

(A) an acrylic curable resin;
(B) resin particles having an average particle diameter of 0.5 to 20 μm;
(C) a silicone/acrylic copolymer oil-repellent agent; and
(D) a compound having two or more isocyanate groups per molecule,

wherein the requirements (i) and (ii) are fulfilled:

(i) the first hard coat of the decorative sheet has a 60-degree gloss value of 15% or less on a surface of the coat; and
(ii) the first hard coat of the decorative sheet has an oleic acid contact angle of 25 degrees or more on a surface of the coat.

[11]. The decorative sheet according to the item [10], wherein the requirement (iii) is further fulfilled:
(iii) the first hard coat of the decorative sheet has an oleic acid contact angle of 20 degrees or more on a surface of the coat after the surface is wiped 10 times back and forth with a cotton containing methanol.
[12]. The decorative sheet according to the item [10] or [11], comprising:

the first hard coat; a second hard coat; and the layer of a film substrate in order from the surface layer side,
wherein the second hard coat is formed from a coating material containing:

(A) an acrylic curable resin;
(B) resin particles having an average particle diameter of 0.5 to 20 μm; and
(D) a compound having two or more isocyanate groups per molecule.

[13]. The decorative sheet according to any one of the items [10] to [12], comprising:

the first hard coat; a second hard coat; a third hard coat; and the layer of a film substrate in order from the surface layer side,
wherein the third hard coat is formed from a coating material containing:

(A) an acrylic curable resin;
(B) resin particles having an average particle diameter of 0.5 to 20 μm; and
(D) a compound having two or more isocyanate groups per molecule.

[14]. An article comprising the decorative sheet according to any one of the items [9] to [13].

ADVANTAGEOUS EFFECTS OF INVENTION

The hard coat formed from the coating material according to the present invention has a matte design. The hard coat formed from a preferable embodiment of the coating material according to the present invention has a matte design and is excellent in stain resistance (or fouling resistance). Furthermore, the hard coat formed from a preferable embodiment of the coating material according to the present invention has good abrasion resistance (or scratch resistance), good crack resistance, and good bending resistance.
Therefore, the coating material according to the present invention can be suitably used as a coating material for forming a hard coat for imparting a matte design to a decorative sheet. Furthermore, the decorative sheet to which a matte design is imparted using a preferable embodiment of the coating material according to the present invention can be applied to a decorative makeup of an adherend having a complicated curved surface.

BRIEF DESCRIPTION OF DRAWINGS

FIG. 1 is a schematic view of a cross section showing an example of the decorative sheet according to the present invention.
FIG. 2 is a $^{13}$C-NMR spectrum of the component (A-1) used in Examples.
FIG. 3 is a GPC curve of the component (C-1) used in Examples.
FIG. 4 is a photograph of the adherend used in Examples.

DESCRIPTION OF EMBODIMENTS

In the present description, the term "film" is used interchangeably or replaceably with the term "sheet". The term "resin" is used as a term including a resin mixture containing two or more resins and a resin composition containing a component other than resins.
The term "surface layer side" means that an article provided with a decorative sheet including a hard coat and a layer of a film substrate is closer to the outer surface when used on site.
Furthermore, in the present description, laminating a certain layer and another layer in order means that the layers are directly laminated, or that the layers are laminated with one or more other layer(s) such as an anchor coat interposed therebetween.
The expression "or more" for a numerical range is used to mean being equal to or greater than a certain numerical value. For example, the phrase "20% or more" means being equal to or greater than 20%. The expression "or less" for a numerical range is used to mean being equal to or less than a certain numerical value. For example, the phrase "20% or less" means being equal to or less than 20%. Furthermore, the symbol "-" for a numerical range is used to mean being equal to or greater than a certain numerical value and being less than or equal to another numerical value. Here, the other numerical value is a numerical value greater than the certain numerical value. For example, the phrase "10-90%" means being equal to or greater than 10% and being less than or equal to 90%.
Excluding the values used in Examples, or unless otherwise specified, all the values used in the present description and claims are to be understood as being modified by the term "about". Without attempting to limit the application of the doctrine of equivalents to the claims, each numerical value should be construed in light of the significant figures and by applying ordinary rounding techniques.

1. Coating material

The coating material according to the present invention comprises an acrylic curable resin (A); resin particles having an average particle diameter of 0.5 to 20 μm (B); a silicone/acrylic copolymer oil-repellent agent (C); and a

compound having two or more isocyanate groups per molecule (D).

The preferable coating material according to the present invention comprises the acrylic curable resin (A); the resin particles having an average particle diameter of 0.5 to 20 μm (B); the silicone/acrylic copolymer oil-repellent agent (C); and the compound having two or more isocyanate groups per molecule (D), and contains no inorganic particles.

The coating material according to the present invention described below (each component and the amount) can be applied as a coating material for forming a first hard coat in an aspect of a decorative sheet including a second hard coat or of a decorative sheet including a second and a third hard coat described below.

(A) Acrylic curable resin

The acrylic curable resin of component (A) is an acrylic resin that can be polymerized and cured using a curing agent such as a compound having an isocyanate group; heat; or an active energy ray such as an ultraviolet ray or an ionizing radiation. Component (A) functions to form a hard coat by polymerization and curing.

Note that examples of the acrylic curable resin of component (A) do not include acrylic resins that are the resin particles having an average particle diameter of 0.5 to 20 μm of component (B). In addition, examples of the acrylic curable resin of component (A) do not include acrylic resins that are the silicone/acrylic copolymer oil-repellent agent of component (C).

The acrylic curable resin of component (A) preferably comprises a structural unit derived from a hydroxyl-group-containing (meth)acrylic acid ester (a1). In the present description, the term "(meth)acrylic acid" means methacrylic acid or acrylic acid. While not intending to be bound by theory, it is considered that the decorative sheet including the hard coat formed using the preferable coating material according to the present invention can be applied also to a decorative makeup of an adherend having a complicated curved surface because the hydroxyl group derived from the structural unit (a1) and the compound having two or more isocyanate groups per molecule (D) can chemically react to form a urethane bond, so that the crack resistance and the bending resistance of the hard coat are improved.

The acrylic curable resin of component (A) more preferably comprises the structural unit derived from a hydroxyl-group-containing (meth)acrylic acid ester (a1); and a structural unit derived from a vinyl aromatic compound (a2). Because the acrylic curable resin comprises the structural unit (a2), the hard coat has good abrasion resistance. Furthermore, because the acrylic curable resin comprises the structural unit (a2), the adhesion between the hard coat and the film substrate can be improved. While not intending to be bound by theory, it is considered that the structural unit (a2) increases the hardness of the hard coat and improves the abrasion resistance because the structural unit (a2) has a rigid structure of an aromatic ring. Furthermore, it is considered that since the aromatic ring has a planar spatial conformation, the adhesion between the hard coat and the film substrate can be improved.

The acrylic curable resin of component (A) still more preferably comprises the structural unit derived from a hydroxyl-group-containing (meth)acrylic acid ester (a1); the structural unit derived from a vinyl aromatic compound (a2); and a structural unit derived from a (meth)acrylic acid alkyl ester (a3). The structural unit derived from a hydroxyl-group-containing (meth)acrylic acid ester (a1) (that is, the structural unit having a hydroxyl group) is not encompassed within the scope of the structural unit (a3). The acrylic curable resin of component (A) most preferably comprises the structural unit derived from a hydroxyl-group-containing (meth)acrylic acid ester (a1); the structural unit derived from a vinyl aromatic compound (a2); a structural unit derived from methacrylic acid methyl ester (a3-1); and/or a structural unit derived from an aliphatic (including alicyclic) alkyl ester of a (meth)acrylic acid, the aliphatic alkyl moiety having 4 or more carbon atoms (a3-2). Because the acrylic curable resin comprises the structural unit (a3-1), the hard coat can have good abrasion resistance. Because the acrylic curable resin comprises the structural unit (a3-2), the hard coat can have good crack resistance and good bending resistance. The structural units (a3-1) and (a3-2) belong to a subordinate concept of the structural unit (a3).

The hydroxyl-group-containing (meth)acrylic acid ester is a (meth)acrylic acid ester having one or more hydroxyl groups in one molecule. Examples of the hydroxyl-group-containing (meth)acrylic acid ester include (meth)acrylic acid esters having one hydroxyl group in one molecule, such as (meth)acrylic acid 2-hydroxyethyl ester, (meth)acrylic acid 2-hydroxypropyl ester, (meth)acrylic acid 3-hydroxypropyl ester, (meth)acrylic acid 2-hydroxybutyl ester, (meth)acrylic acid 3-hydroxybutyl ester, and (meth)acrylic acid 4-hydroxybutyl ester. As the hydroxyl-group-containing (meth)acrylic acid ester, one of these (meth)acrylic acid esters, or a mixture of two or more of them can be used.

The vinyl aromatic compound is a polymerizable monomer having a polymerizable carbon-carbon double bond and an aromatic ring. Examples of the vinyl aromatic compound include styrene, t-butylstyrene, α-methylstyrene, p-methylstyrene, divinylbenzene, 1,1-diphenylstyrene, N,N-diethyl-p-aminoethylstyrene, vinyltoluene, and p-tert-butylstyrene. Among these vinyl aromatic compounds, styrene is preferable. As the vinyl aromatic compound, one of these vinyl aromatic compounds, or a mixture of two or more of them can be used.

The (meth)acrylic acid alkyl ester is an aliphatic (including alicyclic) alkyl ester that may have an ether group of a (meth)acrylic acid. Examples of the (meth)acrylic acid alkyl ester include (meth)acrylic acid methyl ester, (meth)acrylic acid ethyl ester, (meth)acrylic acid propyl ester, (meth)acrylic acid butyl ester, (meth)acrylic acid pentyl ester, (meth)acrylic

acid hexyl ester, (meth)acrylic acid cyclohexyl ester, (meth)acrylic acid 2-ethylhexyl ester, (meth)acrylic acid isooctyl ester, (meth)acrylic acid decyl ester, (meth)acrylic acid dodecyl ester, (meth)acrylic acid myristyl ester, (meth)acrylic acid palmityl ester, and (meth)acrylic acid stearyl ester. Examples of the (meth)acrylic acid alkyl ester having an ether group include (meth)acrylic acid methoxymethyl ester, (meth)acrylic acid ethoxymethyl ester, (meth)acrylic acid 2-ethoxyethyl ester, (meth)acrylic acid 2-butoxyethyl ester, (meth)acrylic acid 2-methoxyethyl ester, (meth)acrylic acid 2-propoxyethyl ester, (meth)acrylic acid 3-methoxypropyl ester, and (meth)acrylic acid 4-methoxybutyl ester. From a viewpoint of good balance between the abrasion resistance and the crack resistance and bending resistance of the hard coat, the methacrylic acid methyl ester (a3-1) and the aliphatic (including alicyclic) alkyl ester of a (meth)acrylic acid, the aliphatic alkyl moiety having 4 or more carbon atoms (a3-2) are preferably used in combination as the (meth)acrylic acid alkyl ester. As the (meth)acrylic acid alkyl ester, one of the (meth)acrylic acid alkyl esters, or a mixture of two or more of the (meth)acrylic acid alkyl esters can be used.

From a viewpoint of the crack resistance and the bending resistance of the hard coat, the content of the structural unit (a1) in the acrylic curable resin of component (A) may be usually 5 mol% or more, preferably 8 mol% or more, and more preferably 10 mol% or more based on 100 mol% of the total of all the structural units. Whereas, from a viewpoint of the blocking resistance with another decorative sheet, the content may be usually 40 mol% or less, preferably 35 mol% or less, and more preferably 30 mol% or less.

In one aspect, the content of the structural unit (a1) in the acrylic curable resin of component (A) may be usually 5 mol% or more and 40 mol% or less, and preferably 5 mol% or more and 35 mol% or less, 5 mol% or more and 30 mol% or less, 8 mol% or more and 40 mol% or less, 8 mol% or more and 35 mol% or less, 8 mol% or more and 30 mol% or less, 10 mol% or more and 40 mol% or less, 10 mol% or more and 35 mol% or less, or 10 mol% or more and 30 mol% or less based on 100 mol% of the total of all the structural units.

From viewpoints of increasing the hardness of the hard coat and improving the abrasion resistance of the hard coat, the content of the structural unit (a2) in the acrylic curable resin of component (A) may be usually 10 mol% or more, preferably 15 mol% or more, and more preferably 20 mol% or more based on 100 mol% of the total of all the structural units. Whereas, from viewpoints of the crack resistance and the bending resistance of the hard coat, the content may be usually 50 mol% or less, preferably 40 mol% or less, and more preferably 35 mol% or less.

In one aspect, the content of the structural unit (a2) in the acrylic curable resin of component (A) may be usually 10 mol% or more and 50 mol% or less, and preferably 10 mol% or more and 40 mol% or less, 10 mol% or more and 35 mol% or less, 15 mol% or more and 50 mol% or less, 15 mol% or more and 40 mol% or less, 15 mol% or more and 35 mol% or less, 20 mol% or more and 50 mol% or less, 20 mol% or more and 40 mol% or less, or 20 mol% or more and 35 mol% or less based on 100 mol% of the total of all the structural units.

From a viewpoint that component (A) can be easily dissolved in a solvent, the content of the structural unit (a3) in the acrylic curable resin of component (A) may be usually 20 mol% or more, preferably 30 mol% or more, and more preferably 40 mol% or more based on 100 mol% of the total of all the structural units. Whereas, from a viewpoint of the solvent resistance of the hard coat, the content may be usually 85 mol% or less, preferably 75 mol% or less, and more preferably 65 mol% or less.

In one aspect, the content of the structural unit (a3) in the acrylic curable resin of component (A) may be usually 20 mol% or more and 85 mol% or less, and preferably 20 mol% or more and 75 mol% or less, 20 mol% or more and 65 mol% or less, 30 mol% or more and 85 mol% or less, 30 mol% or more and 75 mol% or less, 30 mol% or more and 65 mol% or less, 40 mol% or more and 85 mol% or less, 40 mol% or more and 75 mol% or less, or 40 mol% or more and 65 mol% or less based on 100 mol% of the total of all the structural units.

From a viewpoint of the abrasion resistance of the hard coat, the content of the structural unit (a3-1) in the acrylic curable resin of component (A) may be usually 10 mol% or more, preferably 15 mol% or more, and more preferably 20 mol% or more based on 100 mol% of the total of all the structural units. Whereas, from viewpoints of the crack resistance and the bending resistance of the hard coat, the content may be usually 50 mol% or less, preferably 45 mol% or less, and more preferably 40 mol% or less.

In one aspect, the content of the structural unit (a3-1) in the acrylic curable resin of component (A) may be usually 10 mol% or more and 50 mol% or less, and preferably 10 mol% or more and 45 mol% or less, 10 mol% or more and 40 mol% or less, 15 mol% or more and 50 mol% or less, 15 mol% or more and 45 mol% or less, 15 mol% or more and 40 mol% or less, 20 mol% or more and 50 mol% or less, 20 mol% or more and 45 mol% or less, or 20 mol% or more and 40 mol% or less based on 100 mol% of the total of all the structural units.

From viewpoints of the crack resistance and the bending resistance of the hard coat, the content of the structural unit (a3-2) in the acrylic curable resin of component (A) may be usually 5 mol% or more, preferably 10 mol% or more, and more preferably 15 mol% or more based on 100 mol% of the total of all the structural units. Whereas, from viewpoints of the abrasion resistance of the hard coat and preventing production troubles such as the adherence of the coating film before curing to the coating apparatus, the content may be usually 40 mol% or less, preferably 35 mol% or less, more preferably 30 mol% or less, and most preferably 25 mol% or less.

In one aspect, the content of the structural unit (a3-2) in the acrylic curable resin of component (A) may be

usually 5 mol% or more and 40 mol% or less, and preferably 5 mol% or more and 35 mol% or less, 5 mol% or more and 30 mol% or less, 5 mol% or more and 25 mol% or less, 10 mol% or more and 40 mol% or less, 10 mol% or more and 35 mol% or less, 10 mol% or more and 30 mol% or less, 10 mol% or more and 25 mol% or less, 15 mol% or more and 40 mol% or less, 15 mol% or more and 35 mol% or less, 15 mol% or more and 30 mol% or less, or 15 mol% or more and 25 mol% or less based on 100 mol% of the total of all the structural units.

The acrylic curable resin of component (A) may contain, in addition to the structural units (a1), (a2), and (a3), a structural unit derived from other polymerizable monomer that can be copolymerized with at least one of a hydroxyl-group-containing (meth)acrylic acid ester, a vinyl aromatic compound, or a (meth)acrylic acid alkyl ester. The other polymerizable monomer described above is usually a compound having a carbon-carbon double bond and typically a compound having an ethylenic double bond.

The content of each of the structural units such as the structural units (a1), (a2), and (a3) in the acrylic curable resin of component (A) can be determined using $^{13}$C-NMR A $^{13}$C-NMR spectrum can be measured, for example, by dissolving 60 mg of a sample in 0.6 mL of chloroform-dl solvent and using a 125 MHz nuclear magnetic resonance apparatus under the conditions described below. FIG. 2 shows a measurement example of the component (A-1) described below used in Examples. In FIG. 2, the notes "St", "BA", "HEMA", and "MMA" indicating the structural units mean styrene, acrylic acid butyl ester, methacrylic acid 2-hydroxyethyl ester, and methacrylic acid methyl ester, respectively.

Chemical shift standard: 77.0 ppm of chloroform-dl
Measurement mode: decoupling with single pulse reverse gate
Pulse width: 30° (3.70 μs)
Number of points: 32K
Measurement range: 250 ppm (-25 to 225 ppm)
Repetition time: 30.0 seconds
Number of integrations: 7,500 times
Measurement temperature: 25°C
Window function: exponential (BF: 2.00 Hz)

The peaks are attributed with reference to "Polymer Analysis Handbook (September 20, 2008, first edition, first press, edited by The Japan Society for Analytical Chemistry, Polymer Analysis Research Council, published by Asakura Publishing Co., Ltd.)" and "NMR Database (http://polymer.nims.go.jp/NMR/) in Materials Information Technology Station of Independent Administrative Institution called National Institute for Materials Science", and the ratio of each structural unit in component (A) can be calculated from the peak area ratio. In addition, the $^{13}$C-NMR measurement can also be performed at an analysis institute such as MITSUI CHEMICAL ANALYSIS & CONSULTING SERVICE, INC.

The method for producing the acrylic curable resin of component (A) is not particularly limited, and known methods can be used.

From viewpoints of the crack resistance and the bending resistance of the hard coat, the acrylic curable resin of component (A) may usually have a mass average molecular weight of 5,000 or more, and preferably 10,000 or more. Whereas, from a viewpoint of the handleability of the coating material, the mass average molecular weight may be usually 100,000 or less, and preferably 50,000 or less.

In one aspect, the acrylic curable resin of component (A) may usually have a mass average molecular weight of 5,000 or more and 100,000 or less, and preferably 5,000 or more and 50,000 or less, 10,000 or more and 100,000 or less, or 10,000 or more and 50,000 or less.

In the present description, the mass average molecular weight of the acrylic curable resin of component (A) is calculated as a polystyrene-equivalent molecular weight from the differential molecular weight distribution curve (hereinafter sometimes abbreviated as GPC curve) measured by gel permeation chromatography (hereinafter sometimes abbreviated as GPC). The GPC measurement can be performed using high-performance liquid chromatography system "HLC-8320" (trade name) (a system including a degasser, a liquid feeding pump, an autosampler, a column oven, and an RI (differential refractive index) detector) manufactured by Tosoh Corporation; using two GPC columns "KF-806L" (trade name), one "KF-802" (trade name), and one "KF-801" (trade name) manufactured by Shodex, four GPC columns as the total connected in order of KF-806L, KF-806L, KF-802, and KF-801 from the upstream side; and using tetrahydrofuran for high-performance liquid chromatography (containing no stabilizer) manufactured by Wako Pure Chemical Industries, Ltd. as a mobile phase; under the conditions of a flow rate of 1.0 ml/min, a column temperature of 40°C, a sample concentration of 1 mg/ml, and a sample injection amount of 100 μl. The elution amount in each retention volume can be determined from the amount detected by the RI detector, assuming that the refractive index of the measurement sample does not depend on the molecular weight. The calibration curve from the retention volume to the polystyrene-equivalent molecular weight can be prepared using a standard polystyrene "EasiCal PS-1" (trade name) (Plain A having a molecular weight of 6,375,000, 573,000, 117,000, 31,500, or 3,480; Plain B having a molecular weight of 2,517,000, 270,600, 71,800, 10,750, or 705) manufactured by Agilent Technologies, Inc. As an analysis program, "TOSOH HLC-8320GPC EcoSEC" (trade name) manufactured by Tosoh Corporation can be used. For the theory of GPC and the actual measurement, it is possible to make a reference to guide books such as "Size Exclusion Chromatography, High-Performance Liquid Chromatography of Polymers, author: Sadao Mori, first edition, first press, December 10, 1991" edited by KYORITSU SHUPPAN CO., LTD.

The mass average molecular weights of compounds of component (A) used in Examples were measured by the method. The number average molecular weights of compounds of component (A) used in Examples were also measured by the same method.

From a viewpoint of preventing troubles such as the adherence of the coating film before curing to the feed roll of the coating apparatus, the acrylic curable resin of component (A) may usually have a glass transition temperature of 30°C or more, preferably 40°C or more, more preferably 45°C or more, and still more preferably 50°C or more. Whereas, from viewpoints of the crack resistance and the bending resistance of the hard coat, the glass transition temperature may be usually 100°C or less, and preferably 80°C or less.

In one aspect, the acrylic curable resin of component (A) may usually have a glass transition temperature of 30°C or more and 100°C or less, preferably 30°C or more and 80°C or less, 40°C or more and 100°C or less, 40°C or more and 80°C or less, 45°C or more and 100°C or less, 45°C or more and 80°C or less, 50°C or more and 100°C or less, or 50°C or more and 80°C or less.

In the present description, the glass transition temperature of the acrylic curable resin of component (A) is a calculated value determined by an ordinary method, that is, a value determined from the following formula (Fox formula).

$$1/(Tg+273)=W_1/(Tg_1+273)+W_2/(Tg_2+273)+W_3/(Tg_3+273)+\cdots+W_n/(Tg_n+273)$$

In the formula, Tg represents the glass transition temperature (°C) of a polymer including n kinds of monomers, each of $W_1$, $W_2$, $W_3$... $W_n$ represents the mass percentage of each monomer in the monomer composition, and each of $Tg_1$, $Tg_2$, $Tg_3$... $Tg_n$ represents the glass transition temperature (°C) of the homopolymer of each monomer. As the Tg of each homopolymer, for example, numerical values described in Polymer Handbook or the like can be used.

The acrylic curable resin of component (A) may be a resin mixture containing two or more acrylic curable resins. In the case of the resin mixture, the mixture may be required to contain the structural units (a1), (a2), (a3), and the like, and preferably to contain the structural units within the above-mentioned ranges. More preferably, each acrylic curable resin included in the mixture may be required to contain the structural units (a1), (a2), (a3) (or (a3-1) and/or (a3-2) of the subordinate concept), and the like, and still more preferably to contain each structural unit within the above-mentioned range. The same thing also can apply to the other properties of the acrylic curable resin of component (A).

(B) Resin particles having average particle diameter of 0.5 to 20 μm

The resin particles having an average particle diameter of 0.5 to 20 μm of component (B) functions to matte the hard coat.

Examples of the resin particles include particles of resins such as silicone-based resins, styrene-based resins, acrylic resins, fluorine-based resins, polycarbonate-based resins, ethylene-based resins, and cured resins of an amino-based compound and formaldehyde. Among these resin particles, the particles of silicone-based resins, acrylic resins, and fluorine-based resins are preferable from viewpoints of low specific gravity, lubrication properties, dispersibility, and solvent resistance. From a viewpoint of preventing the hard coat from having a feeling of white turbidity, the particles of acrylic resins are more preferable. Furthermore, from a viewpoint of efficiently imparting a matte design to the hard coat, spherical resin particles are preferable. As the resin particles, one of the resin particles, or a mixture of two or more of the resin particles can be used.

From a viewpoint of efficiently imparting a matte design to the hard coat, the resin particles of component (B) usually has an average particle diameter of 0.5 μm or more, preferably 1 μm or more, and more preferably 2 μm or more. Whereas, from viewpoints of preventing the hard coat from having a feeling of white turbidity and of imparting a good tactile sensation, the average particle diameter is usually 20 μm or less, preferably 15 μm or less, more preferably 10 μm or less, and still more preferably 6 μm or less.

In one aspect, the resin particles of component (B) may usually have an average particle diameter of 0.5 μm or more and 20 μm or less, and preferably 0.5 μm or more and 15 μm or less, 0.5 μm or more and 10 μm or less, 0.5 μm or more and 6 μm or less, 1 μm or more and 20 μm or less, 1 μm or more and 15 μm or less, 1 μm or more and 10 μm or less, 1 μm or more and 6 μm or less, 2 μm or more and 20 μm or less, 2 μm or more and 15 μm or less, 2 μm or more and 10 μm or less, or 2 μm or more and 6 μm or less.

In the present description, the average particle diameter of the resin particles is a particle diameter at which the accumulation of the smaller particles in a particle diameter distribution curve measured by a laser diffraction/scattering method reaches 50% by mass. The measurement of the particle diameter distribution curve by a laser diffraction/scattering

method can be performed, for example, using a laser diffraction/scattering particle diameter analyzer "MT3200II" (trade name) manufactured by NIKKISO CO., LTD.

For the measurement of the average particle diameter of the resin particles, a laser diffraction/scattering particle diameter analyzer available from another supplier may be used. That is, those skilled in the art can measure the average particle diameter of the resin particles based on the aforementioned definition and by taking into account the common technical knowledge.

From viewpoints of the crack resistance and the bending resistance of the hard coat, the amount of the resin particles of component (B) may be usually 200 parts by mass or less, preferably 150 parts by mass or less, more preferably 100 parts by mass or less, still more preferably 60 parts by mass or less, and most preferably 50 parts by mass or less based on 100 parts by mass of component (A). Whereas, the lower limit of the amount of the resin particles of component (B) may be, depending on the desired degree of matting, usually 5 parts by mass or more, preferably 10 parts by mass or more, more preferably 20 parts by mass or more, still more preferably 25 parts by mass or more, and most preferably 30 parts by mass or more.

In one aspect, the amount of the resin particles of component (B) may be usually 5 parts by mass or more and 200 parts by mass or less, and preferably 5 parts by mass or more and 150 parts by mass or less, 5 parts by mass or more and 100 parts by mass or less, 5 parts by mass or more and 60 parts by mass or less, 5 parts by mass or more and 50 parts by mass or less, 10 parts by mass or more and 200 parts by mass or less, 10 parts by mass or more and 150 parts by mass or less, 10 parts by mass or more and 100 parts by mass or less, 10 parts by mass or more and 60 parts by mass or less, 10 parts by mass or more and 50 parts by mass or less, 20 parts by mass or more and 200 parts by mass or less, 20 parts by mass or more and 150 parts by mass or less, 20 parts by mass or more and 100 parts by mass or less, 20 parts by mass or more and 60 parts by mass or less, 20 parts by mass or more and 50 parts by mass or less, 25 parts by mass or more and 200 parts by mass or less, 25 parts by mass or more and 150 parts by mass or less, 25 parts by mass or more and 100 parts by mass or less, 25 parts by mass or more and 60 parts by mass or less, 25 parts by mass or more and 50 parts by mass or less, 30 parts by mass or more and 200 parts by mass or less, 30 parts by mass or more and 150 parts by mass or less, 30 parts by mass or more and 100 parts by mass or less, 30 parts by mass or more and 60 parts by mass or less, or 30 parts by mass or more and 50 parts by mass or less.

(C) Silicone/acrylic copolymer oil-repellent agent

The silicone/acrylic copolymer oil-repellent agent of component (C) functions to impart oil repellency to the hard coat to enhance the stain resistance and the abrasion resistance.

The silicone/acrylic copolymer oil-repellent agent of component (C) is not particularly limited as long as it is a silicone/acrylic copolymer and has a function of enhancing oil repellency. Examples of the silicone/acrylic copolymer oil-repellent agent of component (C) include copolymers having a structure in which to an acrylic backbone comprised of a polymer or a copolymer mainly comprising (usually 50 mol% or more, preferably 65 mol% or more, and more preferably 70 mol% or more of) a structural unit derived from a compound having a (meth)acryloyl group, a silicone side chain is added mainly comprising (usually 50 mol% or more, preferably 65 mol% or more, and more preferably 70 mol% or more of) a structural unit derived from a silicon-containing compound such as a compound having an alkoxysilyl group or a compound having a siloxane bond "Si-O-Si".

Examples of the silicone/acrylic copolymer oil-repellent agent of component (C) include copolymers having a structure in which to a silicone backbone mainly comprising (usually 50 mol% or more, preferably 65 mol% or more, and more preferably 70 mol% or more of) a structural unit derived from the silicon-containing compound, an acrylic side chain is added mainly comprising (usually 50 mol% or more, preferably 65 mol% or more, and more preferably 70 mol% or more of) a structural unit derived from the compound having a (meth)acryloyl group.

Examples of the silicone/acrylic copolymer oil-repellent agent of component (C) include random copolymers of the compound having a (meth)acryloyl group and the silicon-containing compound, and block copolymers of the compound having a (meth)acryloyl group and the silicon-containing compound. Among them, from a viewpoint of keeping good oil repellency on the surface of the hard coat after wiping (or, oleic acid contact angle after the surface is wiped 10 times back and forth with cotton containing methanol), the copolymers having a structure in which the silicone side chain is added to the acrylic backbone are preferable.

It is preferable to use a hydroxyl-group-containing (meth)acrylic acid ester as a constituent monomer of the silicone/acrylic copolymer oil-repellent agent of component (C). It can be expected that the hydroxyl group in the structural unit derived from the hydroxyl-group-containing (meth)acrylic acid ester of component (C) and the isocyanate group of component (D) chemically react to form a urethane bond, so that the formed hard coat has good crack resistance and good bending resistance.

The silicone/acrylic copolymer oil-repellent agent of component (C) may have a (meth)acryloyl group, or may have no (meth)acryloyl group. From a viewpoint of exhibiting oil repellency by allowing this component to be present on the surface of the hard coat, it is preferable that the silicone/acrylic copolymer oil-repellent agent of component (C) have

no (meth)acryloyl group or have few (meth)acryloyl groups. Here, the term "few" means that in the Raman spectrum of component (C), based on an intensity of the signal derived from the carbonyl C=O stretching vibration appearing in the vicinity of 1,720 $cm^{-1}$ of 100, the intensity of the signal derived from the carbon-carbon double bond of the (meth)acryloyl group appearing in the vicinity of 1,635 $cm^{-1}$ is usually 10 or less, preferably 5 or less, more preferably 1 or less, still more preferably 0.5 or less, and most preferably 0.1 or less.

The Raman spectrum can be measured using a microlaser Raman spectrometer "NRS-3100" (trade name) manufactured by JASCO Corporation as a system and using a green laser having a wavelength of 532 nm under the following conditions.

Grating: 1800 lines/mm
Exposure time: 20 seconds
Number of integrations: 2 times
Center wave number: 1600 $cm^{-1}$
Slit Φ: 0.05 mm
Dimmer open
Objective lens: "MPLFLN" (trade name) manufactured by Olympus Corporation
Data interval: 0.1 $cm^{-1}$

For the theory of Raman spectra and the actual measurement, it is possible to refer to "Analysis of the surface modificated multifunctional polyacrylates by Laser Raman microscopy" by Yoshinori Kimata and Takashi Tsuda (Toagosei Group Research Annual Report TREND 2016 No. 19, pages 3-1 to 6).

From viewpoints of the stain resistance and the abrasion resistance of the hard coat, the silicone/acrylic copolymer oil-repellent agent of component (C) may usually have a mass average molecular weight of 2,000 or more, and preferably 4,000 or more. Whereas, the mass average molecular weight may be usually 50,000 or less, and preferably 20,000 or less.

In one embodiment, the silicone/acrylic copolymer oil-repellent agent of component (C) may usually have a mass average molecular weight of 2,000 or more and 50,000 or less, and preferably 2,000 or more and 20,000 or less, 4,000 or more and 50,000 or less, or 4,000 or more and 20,000 or less.

The mass average molecular weight of the silicone/acrylic copolymer oil-repellent agent of component (C) is calculated as a polystyrene-equivalent molecular weight from the GPC curve measured by GPC. The GPC measurement can be performed by the same method as described above in the description of component (A). FIG. 3 shows a GPC curve of the component (C-1) described below used in Examples. One clear peak is observed in the region of the lowest molecular weight, and the polystyrene-equivalent molecular weight at the peak top position is 310. Furthermore, three overlapping broad peaks are observed in the region of relatively high molecular weight side, and the polystyrene-equivalent molecular weights at the peak top positions are 1,400, 3,200, and 9,000 in order from the lower molecular weight side. The entire silicone/acrylic copolymer oil-repellent agent has a mass average molecular weight of 6,400, a number average molecular weight of 1,700, and a Z average molecular weight of 16,000.

From a viewpoint of obtaining the effect of using component (C) with certainty, the amount of the silicone/acrylic copolymer oil-repellent agent of component (C) (in terms of solid content; the same applies hereinafter) may be usually 0.05 parts by mass or more, preferably 0.1 part by mass or more, more preferably 0.3 parts by mass or more, still more preferably 0.6 parts by mass or more, and most preferably 1 part by mass or more based on 100 parts by mass of component (A). Whereas, from a viewpoint of economy, the amount may be usually 20 parts by mass or less, preferably 10 parts by mass or less, more preferably 5 parts by mass or less, and still more preferably 3 parts by mass or less.

In one embodiment, the amount of the silicone/acrylic copolymer oil-repellent agent of component (C) may be usually 0.05 parts by mass or more and 20 parts by mass or less, and preferably 0.05 parts by mass or more and 10 parts by mass or less, 0.05 parts by mass or more and 5 parts by mass or less, 0.05 parts by mass or more and 3 parts by mass or less, 0.1 part by mass or more and 20 parts by mass or less, 0.1 part by mass or more and 10 parts by mass or less, 0.1 part by mass or more and 5 parts by mass or less, 0.1 part by mass or more and 3 parts by mass or less, 0.3 parts by mass or more and 20 parts by mass or less, 0.3 parts by mass or more and 10 parts by mass or less, 0.3 parts by mass or more and 5 parts by mass or less, 0.3 parts by mass or more and 3 parts by mass or less, 0.6 parts by mass or more and 20 parts by mass or less, 0.6 parts by mass or more and 10 parts by mass or less, 0.6 parts by mass or more and 5 parts by mass or less, 0.6 parts by mass or more and 3 parts by mass or less, 1 part by mass or more and 20 parts by mass or less, 1 part by mass or more and 10 parts by mass or less, 1 part by mass or more and 5 parts by mass or less, or 1 part by mass or more and 3 parts by mass or less.

(D) Compound having two or more isocyanate groups per molecule

The compound having two or more isocyanate groups (-N=C=O) per molecule of component (D) can react with

the hydroxyl group of component (A) to form a urethane bond, and functions so that the hard coat can have good crack resistance and good bending resistance. Furthermore, component (D) functions so that the adhesion between the hard coat and the film substrate can be made better.

Examples of the compound having two or more isocyanate groups per molecule of component (D) include hexamethylene diisocyanate, isophorone diisocyanate, tolylene diisocyanate, and methylene bis-4-cyclohexyl isocyanate; polyisocyanates such as trimethylolpropane adducts of tolylene diisocyanate, trimethylolpropane adducts of hexamethylene diisocyanate, trimethylolpropane adducts of isophorone diisocyanate, isocyanurates of tolylene diisocyanate, isocyanurates of hexamethylene diisocyanate, isocyanurates of isophorone diisocyanate, and biurets of hexamethylene diisocyanate; and urethane cross-linking agents such as blocked isocyanates of the polyisocyanates.

From a viewpoint of good balance between the abrasion resistance and the crack resistance and bending resistance of the hard coat, as the compound having two or more isocyanate groups per molecule of component (D), compounds having three isocyanate groups per molecule are preferable, and compounds that are a trimer of hexamethylene diisocyanate and have an isocyanate ring structure (Formula (1) shown below), compounds that are a trimer of hexamethylene diisocyanate and are a trimethylolpropane adduct (Formula (2) shown below), and compounds that are a trimer of hexamethylene diisocyanate and are a biuret (Formula (3) shown below: wherein R represents $-(CH_2)_6-$) are more preferable.

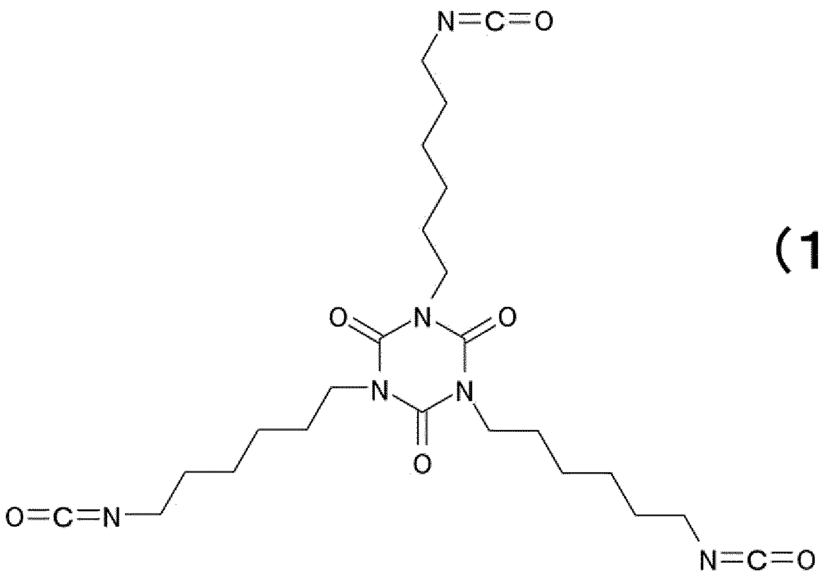

(1)

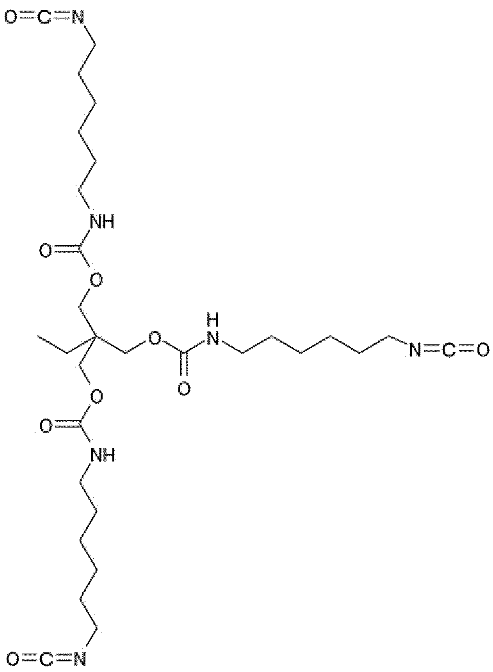

(2)

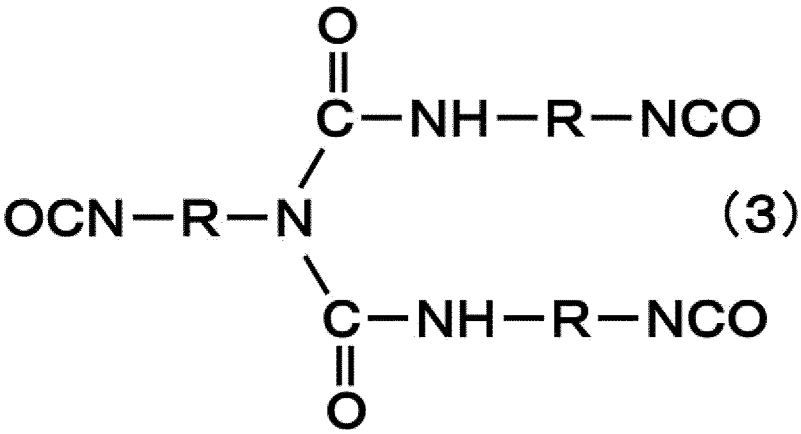

(3)

While not intending to be bound by theory, it is considered that the obtained hard coat is excellent in the crack resistance and the bending resistance, and furthermore, the abrasion resistance because these compounds have a characteristic structure in which isocyanate groups are at the end of each hexamethylene chain and distant from one another. Therefore, it is also considered that compounds, other than the above compounds, having two or more isocyanate groups (-N=C=O) per molecule, and having a similar structure in which isocyanate groups are at the end of each hexamethylene chain and distant from one another can be preferably used similarly.

As the compound having two or more isocyanate groups per molecule of component (D), one of these compounds or a mixture of two or more of these compounds can be used. If desired, a catalyst such as dibutyltin dilaurate or dibutyltin diethylhexoate may be also added as long as an object of the present invention is not adversely affected.

From viewpoints of the crack resistance and the bending resistance of the hard coat, the coating material according to the present invention may usually have a ratio (d/a) between the number (d) of the isocyanate groups derived from the compound having two or more isocyanate groups per molecule of component (D) and the number (a) of the hydroxyl groups derived from the acrylic curable resin of component (A) of 0.5 or more, preferably 0.7 or more, and more preferably 0.8 or more. Whereas, from viewpoints of the water resistance of the hard coat and sufficiently promoting the crosslinking reaction, the ratio (d/a) may be usually 2 or less, preferably 1.6 or less, and more preferably 1.4 or less.

In one embodiment, the ratio (d/a) may be usually 0.5 or more and 2 or less, and preferably 0.5 or more and 1.6 or less, 0.5 or more and 1.4 or less, 0.7 or more and 2 or less, 0.7 or more and 1.6 or less, 0.7 or more and 1.4 or less, 0.8 or more and 2 or less, 0.8 or more and 1.6 or less, or 0.8 or more and 1.4 or less.

The number of the hydroxyl groups derived from the acrylic curable resin of component (A) per unit amount

can be determined in accordance with JIS-K1557-1: 2007 by a method in which the hydroxyl groups in component (A) are acetylated with an acetylating reagent (a pyridine solution of acetic anhydride), then the excess acetylating reagent is hydrolyzed with water, and the generated acetic acid is titrated using an automatic potentiometric titrator "AT-610" (trade name) manufactured by Kyoto Electronics Manufacturing Co., Ltd. with an ethanol solution of potassium hydroxide. When the number of hydroxyl groups can be measured by this method although no hydroxyl group is contained in the structure of the sample, it is considered that the sample may contain a component containing the hydroxyl group as a byproduct.

The number of the isocyanate groups derived from the compound having two or more isocyanate groups per molecule of component (D) per unit amount can be determined in accordance with JIS-K7301: 1995 by a method in which the isocyanate groups in component (D) are reacted with di-n-butylamine, and then the excess di-n-butylamine is titrated using an automatic potentiometric titrator "AT-610" (trade name) manufactured by Kyoto Electronics Manufacturing Co., Ltd. with an aqueous hydrochloric acid solution.

From a viewpoint of the curability, the amount of the compound having two or more isocyanate groups per molecule of component (D) may be usually 100 parts by mass or less, preferably 80 parts by mass or less, more preferably 60 parts by mass or less, and still more preferably 50 parts by mass or less based on 100 parts by mass of component (A). Whereas, from a viewpoint of obtaining the effect of using component (D) with certainty, the amount of component (D) may be usually 1 part by mass or more, preferably 10 parts by mass or more, more preferably 20 parts by mass or more, and still more preferably 25 parts by mass or more based on 100 parts by mass of component (A).

In one embodiment, the amount of the compound having two or more isocyanate groups per molecule of component (D) may be usually 1 part by mass or more and 100 parts by mass or less, and preferably 1 part by mass or more and 80 parts by mass or less, 1 part by mass or more and 60 parts by mass or less, 1 part by mass or more and 50 parts by mass or less, 10 parts by mass or more and 100 parts by mass or less, 10 parts by mass or more and 80 parts by mass or less, 10 parts by mass or more and 60 parts by mass or less, 10 parts by mass or more and 50 parts by mass or less, 20 parts by mass or more and 100 parts by mass or less, 20 parts by mass or more and 80 parts by mass or less, 20 parts by mass or more and 60 parts by mass or less, 20 parts by mass or more and 50 parts by mass or less, 25 parts by mass or more and 100 parts by mass or less, 25 parts by mass or more and 80 parts by mass or less, 25 parts by mass or more and 60 parts by mass or less, or 25 parts by mass or more and 50 parts by mass or less.

If desired, the coating material according to the present invention can optionally contain one component, or two or more components other than components (A) to (D) as long as an object of the present invention is not adversely affected. Examples of the optional component other than components (A) to (D) include curable resins other than component (A), organic particles other than component (B), oil-repellent agents other than component (C), compounds having an isocyanate group other than component (D), thermoplastic resins, antistatic agents, surfactants, leveling agents, thixotropic agents, stain inhibitors (or fouling inhibitors), printability improvers, antioxidants, weather resistance stabilizers, light resistance stabilizers, ultraviolet absorbers, heat stabilizers, and colorants.

The coating material according to the present invention preferably contains no inorganic particles. Inorganic particles (for example, silica (silicon dioxide); metal oxide particles such as aluminum oxide, zirconia, titania, zinc oxide, germanium oxide, indium oxide, tin oxide, indium tin oxide, antimony oxide, and cerium oxide; metal fluoride particles such as magnesium fluoride and sodium fluoride; metal sulfide particles; metal nitride particles; and metal particles) are useful from a viewpoint of imparting a matte design to a decorative sheet. On the other hand, such inorganic particles have a weak interaction with a resin component such as the acrylic curable resin of component (A), which may cause the abrasion resistance of the hard coat to be insufficient. Furthermore, the inorganic particles may cause the hard coat to have a feeling of white turbidity and may also cause a reduction in design. Therefore, the coating material according to the present invention preferably contains no inorganic particles to maintain the abrasion resistance of the hard coat and prevent the hard coat from having a feeling of white turbidity.

Here, the phrase that the coating material "contains no" inorganic particles means that the coating material does not contain a significant amount of inorganic particles. In the coating material for forming the hard coat for imparting a matte design to the decorative sheet, the significant amount of the inorganic particles as a matting agent is usually about 5 parts by mass or more based on 100 parts by mass of the acrylic curable resin of component (A). Therefore, the phrase that the coating material "contains no" inorganic particles can be paraphrased as follows: the amount of the inorganic particles is usually less than 5 parts by mass, preferably 3 parts by mass or less, more preferably 1 part by mass or less, still more preferably 0.1 part by mass or less, and most preferably 0.01 part by mass or less based on 100 parts by mass of component (A).

If desired, the coating material according to the present invention may contain a solvent for dilution to a concentration with which the coating material can be easily applied. The solvent is not particularly limited as long as it does not react with components (A) to (D) and the other optional components or does not catalyze (promote) the self-reaction (including the degradation reaction) of these components. Examples of the solvent include 1-methoxy-2-propanol, ethyl acetate, n-butyl acetate, toluene, methyl ethyl ketone, methyl isobutyl ketone, diacetone alcohol, and acetone. As the solvent, one of these solvents, or a mixture of two or more of them can be used.

The coating material according to the present invention can be produced by mixing and stirring these components.

The method for forming the hard coat using the coating material according to the present invention is not particularly limited, and a known web coating method can be used. Examples of the method include rod coating, roll coating, gravure coating, reverse coating, kiss reverse coating, roll brushing, spray coating, air knife coating, and die coating. Among these methods, from a viewpoint of forming the hard coat having a stable film thickness, rod coating is preferable, and rod coating in which a Meyer bar is used as a rod (hereinafter, sometimes abbreviated as "Meyer bar method") is more preferable.

## 2. Decorative Sheet

The decorative sheet according to the present invention (Embodiment A) is a decorative sheet comprising the hard coat formed using the coating material according to the present invention. The decorative sheet is usually produced and distributed as a roll wound into a roll shape, cut if desired, and used for decoration/makeup on the surface of an article. The hard coat formed using the coating material according to the present invention usually serves as a surface protective layer on the front surface (the surface that is usually viewed in an actual use state) of the decorative sheet according to the present invention. Here, the term "actual use state" means a state in which the decorative sheet is used for decoration/makeup on the surface of various articles.

Examples of the decorative sheet according to the present invention include a decorative sheet having the hard coat formed using the coating material according to the present invention on the surface of a printed layer provided on the surface of the front surface side of a thermoplastic resin film.

The thermoplastic resin film is a layer acting as a substrate of the decorative sheet. The thermoplastic resin film is usually colored and functions to cover the adherend from a viewpoint of design.

Examples of the thermoplastic resin film include films of various resins such as polyvinyl chloride-based resins; polyester-based resins such as aromatic polyesters and aliphatic polyesters; polyolefin-based resins such as polyethylene, polypropylene, and polymethylpentene; acrylic resins; polycarbonate-based resins; poly(meth)acrylimide-based resins; styrene-based resins such as polystyrene, an acrylonitrile/butadiene/styrene copolymer resin (ABS resin), a styrene/ethylene/butadiene/styrene copolymer, a styrene/ethylene/propylene/styrene copolymer, and a styrene/ethylene/ethylene/propylene/styrene copolymer; cellulose-based resins such as cellophane, triacetyl cellulose, diacetyl cellulose, and acetyl cellulose butyrate; polyvinylidene chloride-based resins; fluorine-containing resins such as polyvinylidene fluoride; and other resins such as polyvinyl alcohol, ethylene vinyl alcohol, polyether ether ketone, nylon, polyamides, polyimides, polyurethanes, polyetherimide, polysulfone, and polyethersulfone. Examples of the films include unstretched films, uniaxially stretched films, and biaxially stretched films. Furthermore, examples of the thermoplastic resin film include laminated films in which one or more of these films are laminated in two or more layers.

The colorant for coloring the thermoplastic resin film is not particularly limited, and any colorant can be used. Examples of the colorant include inorganic pigments such as titanium oxide, carbon black, zinc white, red iron oxide, and Prussian blue; and organic pigments such as azo-based, phthalocyanine-based, quinacridone-based, perylene-based, perinone-based, isoindolinone-based, isoindoline-based, anthraquinone-based, quinophthalone-based, and dioxazine-based organic pigments. As the colorant, one of these colorants, or a mixture of two or more of them can be used. The amount of the colorant depends on the type of the colorant and the desired concealing property, and is usually about 0.1 to 40 parts by mass based on 100 parts by mass of the base material resin used in the thermoplastic resin film.

The thickness of the thermoplastic resin film is not particularly limited, and may be preferably 50 μm or more, and more preferably 75 μm or more from a viewpoint of the handleability during the production of the decorative sheet. Whereas, from a viewpoint of the workability for adhering the decorative sheet to an article, the thickness of the thermoplastic resin film may be usually 300 μm or less, and preferably 250 μm or less.

In one aspect, the thickness of the thermoplastic resin film may be 50 μm or more and 300 μm or less, 50 μm or more and 250 μm, 75 μm or more and 300 μm or less, or 75 μm or more and 250 μm.

The printed layer is provided to impart high design, and can be formed by printing any pattern using any ink and any printing machine.

The printed layer can be applied to the entire or partial surface of the front surface side of the thermoplastic resin film directly or with an anchor coat interposed therebetween. Examples of the pattern include metal tone patterns such as hairlines, wood grain patterns, stone grain patterns that imitate the surface of rock such as marble, a cloth pattern that simulates a texture pattern or a cloth-like pattern, tile pasted patterns, brickwork patterns, parquet patterns, and patchwork.

As the printing ink, inks produced by appropriately mixing a pigment, a solvent, a stabilizer, a plasticizer, a catalyst, a curing agent, and the like with a binder can be used. As the binder, a resin or a resin composition of the resin can be used. Examples of the resin include polyurethane-based resins, vinyl chloride/vinyl acetate-based copolymer resins, vinyl chloride/vinyl acetate/acrylic copolymer resins, chlorinated polypropylene-based resins, acrylic resins, polyester-based resins, polyamide-based resins, butyral-based resins, polystyrene-based resins, nitrocellulose-based resins, and cellulose acetate-based resins. Furthermore, in order to impart a metal tone design, aluminum, tin, titanium, indium, oxides of the metals, and the like can be deposited on the entire or partial surface of the front surface side of the thermoplastic resin film directly or with an anchor coat interposed therebetween by a known method.

The method for forming the hard coat on the surface of the printed layer formed on the surface of the front surface side of the thermoplastic resin film directly or with an anchor coat interposed therebetween using the coating material according to the present invention is not particularly limited, and a known web coating method can be used. Examples of the method include rod coating, roll coating, gravure coating, reverse coating, kiss reverse coating, roll brushing, spray coating, air knife coating, and die coating. Among the methods, from a viewpoint of forming the hard coat having a stable film thickness, rod coating is preferable, and Meyer bar method is more preferable.

When a matte hard coat is formed using the coating material according to the present invention, the coating amount (mass after curing) is not particularly limited, and may be usually 1 $g/m^2$ or more, preferably 2 $g/m^2$ or more, more preferably 3 $g/m^2$ or more, and still more preferably 3.5 $g/m^2$ or more from a viewpoint of the abrasion resistance of the hard coat. Whereas, from a viewpoint of the matte property, the coating amount of the coating material according to the present invention may be usually 30 $g/m^2$ or less, preferably 20 $g/m^2$ or less, more preferably 10 $g/m^2$ or less, and still more preferably 7 $g/m^2$ or less.

In one aspect, the coating amount of the coating material according to the present invention may be usually 1 $g/m^2$ or more and 30 $g/m^2$ or less, and preferably 1 $g/m^2$ or more and 20 $g/m^2$ or less, 1 $g/m^2$ or more and 10 $g/m^2$ or less, 1 $g/m^2$ or more and 7 $g/m^2$ or less, 2 $g/m^2$ or more and 30 $g/m^2$ or less, 2 $g/m^2$ or more and 20 $g/m^2$ or less, 2 $g/m^2$ or more and 10 $g/m^2$ or less, 2 $g/m^2$ or more and 7 $g/m^2$ or less, 3 $g/m^2$ or more and 30 $g/m^2$ or less, 3 $g/m^2$ or more and 20 $g/m^2$ or less, 3 $g/m^2$ or more and 10 $g/m^2$ or less, 3 $g/m^2$ or more and 7 $g/m^2$ or less, 3.5 $g/m^2$ or more and 30 $g/m^2$ or less, 3.5 $g/m^2$ or more and 20 $g/m^2$ or less, 3.5 $g/m^2$ or more and 10 $g/m^2$ or less, or 3.5 $g/m^2$ or more and 7 $g/m^2$ or less.

The anchor coat agent for forming the anchor coat is not particularly limited, and any anchor coat agent can be used. Examples of the anchor coat agent include polyester-based, acrylic, polyurethane-based, acrylic urethane-based, and polyester urethane-based anchor coat agents. As the anchor coat agent, one or more of these anchor coat agents can be used.

If desired, the anchor coat agent may contain one of, or two or more of additives such as antioxidants, weather resistance stabilizers, light resistance stabilizers, ultraviolet absorbers, heat stabilizers, antistatic agents, surfactants, colorants, infrared shielding agents, leveling agents, thixotropic agents, and fillers as long as an object of the present invention is not adversely affected.

The method for forming the anchor coat using the anchor coat agent is not particularly limited, and a known web coating method can be used. Examples of the method include rod coating, roll coating, gravure coating, reverse coating, kiss reverse coating, roll brushing, spray coating, air knife coating, and die coating.

The thickness of the anchor coat is not particularly limited, and may be usually about 0.01 to 5 $\mu m$ and preferably 0.1 to 2 $\mu m$.

From a viewpoint of improving the adhesion with the adherend subjected to makeup/decoration using the decorative sheet according to the present invention, the decorative sheet may have a pressure-sensitive adhesive layer or an adhesive layer formed on the surface of the thermoplastic resin film opposite to the surface of the front surface side, directly or with the anchor coat interposed therebetween.

In one aspect (Embodiment B), the decorative sheet according to the present invention includes a first hard coat, a second hard coat, and a layer of a film substrate in order from the surface layer side,
the first hard coat is formed from a coating material containing:

(A) an acrylic curable resin;
(B) resin particles having an average particle diameter of 0.5 to 20 $\mu m$;
(C) a silicone/acrylic copolymer oil-repellent agent; and
(D) a compound having two or more isocyanate groups per molecule (D), and

the second hard coat is formed from a coating material containing:

(A) an acrylic curable resin;
(B) resin particles having an average particle diameter of 0.5 to 20 $\mu m$; and
(D) a compound having two or more isocyanate groups per molecule.

Here, as the components of the coating material for forming the first hard coat, the above-mentioned components can be used. The amount of one or a plural of the components may be as described above.

In another aspect (Embodiment (C), the decorative sheet according to the present invention may include a first

hard coat, a second hard coat, a third hard coat, and a layer of a film substrate in order from the surface layer side, wherein the first hard coat is formed from a coating material containing:

(A) an acrylic curable resin;
(B) resin particles having an average particle diameter of 0.5 to 20 μm;
(C) a silicone/acrylic copolymer oil-repellent agent; and
(D) a compound having two or more isocyanate groups per molecule, and

the second hard coat is formed from a coating material containing:

(A) an acrylic curable resin;
(B) resin particles having an average particle diameter of 0.5 to 20 μm; and
(D) a compound having two or more isocyanate groups per molecule, and/or

the third hard coat is formed from a coating material containing:

(A) an acrylic curable resin;
(B) resin particles having an average particle diameter of 0.5 to 20 μm; and
(D) a compound having two or more isocyanate groups per molecule.

Here, as the components of the coating material for forming the first hard coat, the above-mentioned components can be used. The amount of one or a plural of the components may be as described above.

The decorative sheets in Embodiments B and C (the subordinate concepts of Embodiment A) have good matte property by laminating two or three layers of the hard coat. It should be noted that the coating material for forming the second hard coat and the coating material for forming the third hard coat may have the same or different formulations in composition, but it is not limited. Furthermore, the coating material for forming the second hard coat and/or the coating material for forming the third hard coat may contain an oil-repellent agent such as component (C), however, the coating material containing no oil-repellent agent is preferable from a viewpoint that a further coating material can be successfully applied to the surface of the second hard coat and/or the third hard coat without being repelled.

Here, the phrase that the coating material "contains no" oil-repellent agent such as the silicone/acrylic copolymer oil-repellent agent of component (C) means that when a further coating material is applied to the surface of the hard coat formed using the coating material for forming the hard coat, the coating material does not contain a significant amount of oil-repellent agent from a viewpoint whether the further coating material to be applied is repelled and cannot be successfully applied (in this case, the amount of the oil-repellent agent is a significant amount) or whether the further coating material can be successfully applied without being repelled (in this case, the amount of the oil-repellent agent is not a significant amount). The significant amount of the oil-repellent agent is usually about 0.1 part by mass or more based on 100 parts by mass of the acrylic curable resin of component (A). Therefore, the phrase that the coating material "contains no" oil-repellent agent can be restated as that the amount of the oil-repellent agent is usually less than 0.1 part by mass, preferably 0.01 part by mass or less, more preferably 0.005 parts by mass or less, still more preferably 0.001 part by mass or less, and most preferably 0.0001 part by mass or less or 0 part by mass based on 100 parts by mass of component (A).

As the acrylic curable resin (A), the resin particles having an average particle diameter of 0.5 to 20 μm (B), and the compound having two or more isocyanate groups per molecule (D) for the coating material for forming the second hard coat, the same as described above in "1. Coating material" can be used.

From viewpoints of the crack resistance and the bending resistance of the hard coat, the amount of the resin particles having an average particle diameter of 0.5 to 20 μm of component (B) in the coating material for forming the second hard coat may be usually 200 parts by mass or less, preferably 150 parts by mass or less, more preferably 100 parts by mass or less, still more preferably 60 parts by mass or less, and most preferably 50 parts by mass or less based on 100 parts by mass of component (A). Whereas, the lower limit of the amount of component (B) may be, depending on the desired degree of matting, usually 5 parts by mass or more, preferably 10 parts by mass or more, more preferably 20 parts by mass or more, still more preferably 25 parts by mass or more, and most preferably 30 parts by mass or more.

In one aspect, the amount of the resin particles of component (B) in the coating material for forming the second hard coat may be usually 5 parts by mass or more and 200 parts by mass or less, and preferably 5 parts by mass or more and 150 parts by mass or less, 5 parts by mass or more and 100 parts by mass or less, 5 parts by mass or more and 60 parts by mass or less, 5 parts by mass or more and 50 parts by mass or less, 10 parts by mass or more and 200 parts by mass or less, 10 parts by mass or more and 150 parts by mass or less, 10 parts by mass or more and 100 parts by mass or less, 10 parts by mass or more and 60 parts by mass or less, 10 parts by mass or more and 50 parts by mass or less, 20 parts by mass or more and 200 parts by mass or less, 20 parts by mass or more and 150 parts by

mass or less, 20 parts by mass or more and 100 parts by mass or less, 20 parts by mass or more and 60 parts by mass or less, 20 parts by mass or more and 50 parts by mass or less, 25 parts by mass or more and 200 parts by mass or less, 25 parts by mass or more and 150 parts by mass or less, 25 parts by mass or more and 100 parts by mass or less, 25 parts by mass or more and 60 parts by mass or less, 25 parts by mass or more and 50 parts by mass or less, 30 parts by mass or more and 200 parts by mass or less, 30 parts by mass or more and 150 parts by mass or less, 30 parts by mass or more and 100 parts by mass or less, 30 parts by mass or more and 60 parts by mass or less, or 30 parts by mass or more and 50 parts by mass or less.

From a viewpoint of the curability, the amount of the compound having two or more isocyanate groups per molecule of component (D) in the coating material for forming the second hard coat may be usually 100 parts by mass or less, preferably 80 parts by mass or less, more preferably 60 parts by mass or less, and still more preferably 50 parts by mass or less based on 100 parts by mass of component (A). Whereas, from a viewpoint of obtaining the effect of using component (D) with certainty, the amount may be usually 1 part by mass or more, preferably 10 parts by mass or more, more preferably 20 parts by mass or more, and still more preferably 25 parts by mass or more.

In one embodiment, the amount of the compound having two or more isocyanate groups per molecule of component (D) in the coating material for forming the second hard coat may be usually 1 part by mass or more and 100 parts by mass or less, and preferably 1 part by mass or more and 80 parts by mass or less, 1 part by mass or more and 60 parts by mass or less, 1 part by mass or more and 50 parts by mass or less, 10 parts by mass or more and 100 parts by mass or less, 10 parts by mass or more and 80 parts by mass or less, 10 parts by mass or more and 60 parts by mass or less, 10 parts by mass or more and 50 parts by mass or less, 20 parts by mass or more and 100 parts by mass or less, 20 parts by mass or more and 80 parts by mass or less, 20 parts by mass or more and 60 parts by mass or less, 20 parts by mass or more and 50 parts by mass or less, 25 parts by mass or more and 100 parts by mass or less, 25 parts by mass or more and 80 parts by mass or less, 25 parts by mass or more and 60 parts by mass or less, or 25 parts by mass or more and 50 parts by mass or less.

If desired, the coating material for forming the second hard coat can optionally contain one component, or two or more components other than components (A), (B) and (D) as long as an object of the present invention is not adversely affected. Examples of the optional component other than components (A), (B), and (D) include curable resins other than component (A), organic particles other than component (B), compounds having an isocyanate group other than component (D), thermoplastic resins, antistatic agents, surfactants, leveling agents, thixotropic agents, staining inhibitors, printability improvers, antioxidants, weather resistance stabilizers, light resistance stabilizers, ultraviolet absorbers, heat stabilizers, inorganic particles, and colorants.

As the acrylic curable resin (A), the resin particles having an average particle diameter of 0.5 to 20 μm (B), and the compound having two or more isocyanate groups per molecule (D) for the coating material for forming the third hard coat, the same as described above in "1. Coating material" can be used.

From viewpoints of the crack resistance and the bending resistance of the hard coat, the amount of the resin particles having an average particle diameter of 0.5 to 20 μm of component (B) in the coating material for forming the third hard coat may be usually 200 parts by mass or less, preferably 150 parts by mass or less, more preferably 100 parts by mass or less, still more preferably 60 parts by mass or less, and most preferably 50 parts by mass or less based on 100 parts by mass of component (A). Whereas, the lower limit of the amount of component (B) may be, depending on the desired degree of matting, usually 5 parts by mass or more, preferably 10 parts by mass or more, more preferably 20 parts by mass or more, still more preferably 25 parts by mass or more, and most preferably 30 parts by mass or more.

In one aspect, the amount of the resin particles of component (B) in the coating material for forming the third hard coat may be usually 5 parts by mass or more and 200 parts by mass or less, and preferably 5 parts by mass or more and 150 parts by mass or less, 5 parts by mass or more and 100 parts by mass or less, 5 parts by mass or more and 60 parts by mass or less, 5 parts by mass or more and 50 parts by mass or less, 10 parts by mass or more and 200 parts by mass or less, 10 parts by mass or more and 150 parts by mass or less, 10 parts by mass or more and 100 parts by mass or less, 10 parts by mass or more and 60 parts by mass or less, 10 parts by mass or more and 50 parts by mass or less, 20 parts by mass or more and 200 parts by mass or less, 20 parts by mass or more and 150 parts by mass or less, 20 parts by mass or more and 100 parts by mass or less, 20 parts by mass or more and 60 parts by mass or less, 20 parts by mass or more and 50 parts by mass or less, 25 parts by mass or more and 200 parts by mass or less, 25 parts by mass or more and 150 parts by mass or less, 25 parts by mass or more and 100 parts by mass or less, 25 parts by mass or more and 60 parts by mass or less, 25 parts by mass or more and 50 parts by mass or less, 30 parts by mass or more and 200 parts by mass or less, 30 parts by mass or more and 150 parts by mass or less, 30 parts by mass or more and 100 parts by mass or less, 30 parts by mass or more and 60 parts by mass or less, or 30 parts by mass or more and 50 parts by mass or less.

From a viewpoint of the curability, the amount of the compound having two or more isocyanate groups per molecule of component (D) in the coating material for forming the third hard coat may be usually 100 parts by mass or less, preferably 80 parts by mass or less, more preferably 60 parts by mass or less, and still more preferably 50 parts by mass or less based on 100 parts by mass of component (A). Whereas, from a viewpoint of obtaining the effect of

using component (D) with certainty, the amount may be usually 1 part by mass or more, preferably 10 parts by mass or more, more preferably 20 parts by mass or more, and still more preferably 25 parts by mass or more.

In one embodiment, the amount of the compound having two or more isocyanate groups per molecule of component (D) in the coating material for forming the second hard coat may be usually 1 part by mass or more and 100 parts by mass or less, and preferably 1 part by mass or more and 80 parts by mass or less, 1 part by mass or more and 60 parts by mass or less, 1 part by mass or more and 50 parts by mass or less, 10 parts by mass or more and 100 parts by mass or less, 10 parts by mass or more and 80 parts by mass or less, 10 parts by mass or more and 60 parts by mass or less, 10 parts by mass or more and 50 parts by mass or less, 20 parts by mass or more and 100 parts by mass or less, 20 parts by mass or more and 80 parts by mass or less, 20 parts by mass or more and 60 parts by mass or less, 20 parts by mass or more and 50 parts by mass or less, 25 parts by mass or more and 100 parts by mass or less, 25 parts by mass or more and 80 parts by mass or less, 25 parts by mass or more and 60 parts by mass or less, or 25 parts by mass or more and 50 parts by mass or less.

If desired, the coating material for forming the third hard coat can optionally contain one component, or two or more components other than components (A), (B) and (D) as long as an object of the present invention is not adversely affected. Examples of the optional component other than components (A), (B), and (D) include curable resins other than component (A), organic particles other than component (B), compounds having an isocyanate group other than component (D), thermoplastic resins, antistatic agents, surfactants, leveling agents, thixotropic agents, staining inhibitors, printability improvers, antioxidants, weather resistance stabilizers, light resistance stabilizers, ultraviolet absorbers, heat stabilizers, inorganic particles, and colorants.

FIG. 1 is a schematic view of a cross section showing an example of the decorative sheet according to the present invention (Embodiment A). In order from the surface layer side, the decorative sheet includes a hard coat 1 formed from the coating material according to the present invention, a printed layer 3, a layer of a colored thermoplastic resin film 4, and a pressure-sensitive adhesive layer 5. The hard coat 1 contains resin particles 2 having an average particle diameter of 0.5 to 20 μm, so that irregularities are formed on the surface of the hard coat 1 to impart a matte design.

From a viewpoint of the matte property, the decorative sheet according to the present invention may have a 60-degree gloss value (measured in accordance with JIS Z8741: 1997 using a multi-angle gloss meter "GM-268" (trade name) manufactured by KONICA MINOLTA, INC.) on the surface of the hard coat in the outermost surface side of preferably 15% or less, more preferably 10% or less, still more preferably 8% or less, still even more preferably 5% or less, and most preferably 3% or less in any of Embodiments A to C. Whereas, from a viewpoint of making the scratch (or abrasion) on the surface of the hard coat less noticeable, the 60-degree gloss value may be preferably 1% or more.

From a viewpoint of the anti-stain property (or antifouling property), the decorative sheet according to the present invention may have an oleic acid contact angle on the surface of the hard coat in the outermost surface side of preferably 25 degrees or more, more preferably 35 degrees or more, still more preferably 40 degrees or more, and most preferably 45 degrees or more in any of Embodiments A to C. A larger oleic acid contact angle of the decorative sheet is preferable. Here, the oleic acid contact angle can be measured using an automatic contact angle meter "DSA20" (trade name) manufactured by KRUSS GmbH and using oleic acid "Cica first grade" (where the term "Cica" is a phonetic translation) manufactured by KANTO CHEMICAL CO., INC. under the condition of a temperature of 23°C by a method of calculating from the width and the height of an oil droplet (see JIS R3257: 1999).

From a viewpoint of the anti-stain property, the decorative sheet according to the present invention may have an oleic acid contact angle on the surface of the hard coat in the outermost surface side measured in accordance with the test (iii) "Oil repellency after wiping (oleic acid contact angle after wipe of surface 10 times back and forth with cotton containing methanol)" in the following Examples of preferably 20 degrees or more, more preferably 30 degrees or more, still more preferably 35 degrees or more, and most preferably 40 degrees or more in any of Embodiments A to C. A larger oil repellency after wiping (i.e. a larger oleic acid contact angle after wipe of the surface 10 times back and forth with cotton containing methanol) of the decorative sheet is preferable.

## EXAMPLES

Hereinafter, the present invention will be described with reference to Examples, however, the present invention is not limited thereto.

### Measuring methods

(i) 60-Degree gloss value (matte property)

The 60-degree gloss value of the surface of a hard coat was measured in accordance with JIS Z8741: 1997 using a multi-angle gloss meter "GM-268" (trade name) manufactured by KONICA MINOLTA, INC.

(ii) Oleic acid contact angle

On the surface of the hard coat of a decorative sheet, the oleic acid contact angle was measured using an automatic contact angle meter "DSA20" (trade name) manufactured by KRUSS GmbH and using oleic acid "Cica first grade" (where the term "Cica" is a phonetic translation) manufactured by KANTO CHEMICAL CO., INC. under the condition of a temperature of 23°C by a method of calculating from the width and the height of an oil droplet (see JIS R3257: 1999).

(iii) Oil repellency after wiping (oleic acid contact angle after wipe of surface 10 times back and forth with cotton containing methanol)

A test piece having a length of 150 mm and a width of 50 mm was taken so that the machine direction of the decorative sheet was the longitudinal direction of the test piece, the test piece was set on a Gakushin-type tester in accordance with JIS L0849: 2013 so that the hard coat of the decorative sheet was toward the upside, and a stainless steel plate (length 10 mm, width 10 mm, thickness 1 mm) covered with four layers of gauze (medical type 1 gauze manufactured by Kawamoto Corporation) was attached to a friction terminal of the Gakushin-type tester and set so that the length and width surface of the stainless steel plate was in contact with the test piece. With gauze containing 3 ml of methanol (methanol of JIS special grade manufactured by Wako Pure Chemical Industries, Ltd.) (in a dipped state), the surface of the hard coat of the test piece was wiped 10 times back and forth under the conditions of a moving distance of the friction terminal of 60 mm and a speed of 1 reciprocation/sec, and then the oleic acid contact angle on the wiped part was measured in the same manner as in the above-mentioned test (ii).

(iv) Nail scratch

A float glass plate having a thickness of 5 mm was set on a table, a test piece having a length of 150 mm and a width of 100 mm was taken so that the machine direction of the decorative sheet was the longitudinal direction of the test piece, the test piece was set on the surface of the float glass plate so that the hard coat of the decorative sheet was toward the upside, and both the float glass plate and the test piece were fixed not to move. After conditioning for 24 hours in an environment of a temperature of 23 ± 2°C and a relative humidity of 50 to 65%, in the same environment, the evaluation surface of the test piece (the surface of the hard coat) was scratched rapidly in a spiral shape having a diameter of 2 cm with an index finger of a dominant hand vertically pressed on the evaluation surface forcibly. At this time, the back of the dominant hand was parallel to the evaluation surface and the index finger of the dominant hand was perpendicular to the evaluation surface. The traces of the spiral scratching were visually observed and evaluated in accordance with the following criteria.

◎ (Very good): no scratch is observed even in a close observation with reflected light changing in the direction.
○ (Good): a scratch is observed in a close observation with reflected light changing in the direction.
Δ (Slightly poor): a scratch is observed in an observation without reflected light changing in the direction.
× (Poor): a scraped part or a dropped part of the hard coat is observed.

(v) Finger slidability

An index finger was slid on the surface of the hard coat of the decorative sheet up, down, left, right, and circularly, and the finger slidability was evaluated by the impression of whether or not the index finger was slid as desired. The test was conducted by 10 people, the finger slidability in each test was scored as 2 points when the index finger was slid as desired, 1 point when slid almost as desired, and 0 point when not slid as desired because, for example, the index finger was caught, and the scores were aggregated to evaluate in accordance with the following criteria.

◎ (Very good): 17 to 20 points
○ (Good): 13 to 16 points
Δ (Slightly poor): 9 to 12 points
× (Poor): 0 to 8 points

(vi) Mandrel test (indicator of crack resistance and bending resistance)

In accordance with JIS K5600-5-1: 1999, a bending resistance test was performed by a cylindrical mandrel method using a sample taken from the decorative sheet so that the sample had a size of 100 mm in the machine direction of the decorative sheet and 50 mm in the transverse direction. The diameter of the mandrel having the smallest diameter

among the mandrels that did not crack was determined.

(vii) Formability 1

(vii-1) A medium density fiber board (hereinafter referred to as "MDF") "MDF processed product" (trade name) (i.e. an MDF with a smooth surface) manufactured by Tokunaga NC Co., Ltd. was cut into a length of 300 mm, a width of 200 mm, and a thickness of 18 mm, subjected to curved surface processing (3 to 10R), and carved with a decorative groove on the top surface to obtain an adherend. FIG. 4 shows a photograph of the obtained adherend.

(vii-2) The entire surface of the obtained adherend was sprayed with an adhesive "630.2" (trade name) manufactured by KLEBCHEMIE M.G.Becker GmbH & Co. KG.

(vii-3) A pedestal (produced from an MDF with a smooth surface having a length of 290 mm, a width of 180 mm, and a thickness of 18 mm) was set at a predetermined position of a membrane molding machine "PRESSEN KT-M-139/280-24" (trade name) manufactured by Wemhöner Surface Technologies, and the adherend was set on the pedestal so that the opposite surface of the adherend from the top surface was toward the pedestal, the longitudinal direction of the pedestal coincided with the longitudinal direction of the adherend, and the intersection of the diagonal lines of the length and width surface of the pedestal coincided with the intersection of the diagonal lines of the length and width surface of the adherend. A cut decorative sheet (having a size of 450 mm in the machine direction and 350 mm in the transverse direction) was further set on the adherend so that a surface of the decorative sheet opposite to the hard coat surface was a pasted surface; so that the longitudinal direction of the adherend coincided with the machine direction of the decorative sheet; and so that the intersection of the diagonal lines of the length and width surface of the adherend coincided with the intersection of the diagonal lines of the length and width surface of the cut decorative sheet.

(vii-4) Preheating was performed so that the surface temperature of the membrane of the membrane molding machine was 80°C, and then membrane molding was performed under the conditions of a temperature of 110°C, a pressing time of 60 seconds, and a pressure of 0.39 MPa to obtain a molded body.

(vii-5) The appearance of the molded body obtained above was visually observed with the naked eye (corrected visual acuity: 1.0) or using a magnifier (magnification: 25 times), and evaluated in accordance with the following criteria.

A: The decorative sheet uniformly follows the three-dimensional shape of the adherend, and the color and the pattern extend uniformly. No crack is recognized even with a magnifier.
B: The decorative sheet follows the three-dimensional shape of the adherend and is stretched. However, in the greatly stretched part, the hard coat has a fine crack that is not recognized by the naked eye but is recognized by using a magnifier.
C: The decorative sheet follows the three-dimensional shape of the adherend and is stretched. However, in the greatly stretched part, the hard coat has a fine crack that is recognized by the naked eye.
D: There is a part where the decorative sheet does not follow the three-dimensional shape of the adherend.

(viii) Formability 2

The formability was evaluated in the same manner as in Formability 1 described above except that no decorative groove was formed on the top surface of the adherend.

Raw materials used

(A) Acrylic curable resins

(A-1) A resin comprised of 19.8 mol% of a structural unit derived from methacrylic acid 2-hydroxyethyl ester, 28.6 mol% of a structural unit derived from styrene, 33.6 mol% of a structural unit derived from methacrylic acid methyl ester, and 18.0 mol% of a structural unit derived from acrylic acid butyl ester. The mass average molecular weight is 23,000, and the number average molecular weight is 10,000. The number of hydroxyl groups per unit amount is 1.75 mol/Kg, and the glass transition temperature (calculated by the FOX formula; the same applies hereinafter) is 52°C.

(A-2) A resin comprised of 10.2 mol% of a structural unit derived from methacrylic acid 2-hydroxyethyl ester, 28.3 mol% of a structural unit derived from styrene, 38.8 mol% of a structural unit derived from methacrylic acid methyl ester, and 22.7 mol% of a structural unit derived from acrylic acid butyl ester. The mass average molecular weight is 25,000, and the number average molecular weight is 11,000. The number of hydroxyl groups per unit amount is 0.91 mol/Kg, and the glass transition temperature is 46°C.

(A-3) A resin comprised of 20.4 mol% of a structural unit derived from methacrylic acid 2-hydroxyethyl ester, 39.5 mol% of a structural unit derived from styrene, 25.3 mol% of a structural unit derived from methacrylic acid methyl ester, and 14.8 mol% of a structural unit derived from acrylic acid butyl ester. The mass average molecular weight is

24,000, and the number average molecular weight is 10,000. The number of hydroxyl groups per unit amount is 1.80 mol/Kg, and the glass transition temperature is 57°C.

(A-4) A resin comprised of 19.6 mol% of a structural unit derived from methacrylic acid 2-hydroxyethyl ester, 29.2 mol% of a structural unit derived from styrene, 27.1 mol% of a structural unit derived from methacrylic acid methyl ester, and 24.1 mol% of a structural unit derived from acrylic acid butyl ester. The mass average molecular weight is 27,000, and the number average molecular weight is 13,000. The number of hydroxyl groups per unit amount is 1.70 mol/Kg, and the glass transition temperature is 40°C.

(B) Resin particles having average particle diameter of 0.5 to 20 μm

(B-1) Crosslinked acrylic resin particles "Art Pearl J-6PF" (trade name) manufactured by Negami chemical Industrial co., ltd. The average particle diameter is 4 μm.

(B-2) Crosslinked acrylic resin particles "Art Pearl SE-010T" (trade name) manufactured by Negami chemical Industrial co., ltd. The average particle diameter is 10 μm.

(B-3) Crosslinked acrylic resin particles "Art Pearl J-4PY" (trade name) manufactured by Negami chemical Industrial co., ltd. The average particle diameter is 2 μm.

(C) Silicone/acrylic copolymer oil-repellent agents

(C-1) "GL-01" (trade name) manufactured by Kyoeisha Chemical Co., Ltd. A copolymer having a structure in which a silicone side chain is added to an acrylic backbone. The copolymer has no (meth)acryloyl group (a signal derived from the carbon-carbon double bond of the (meth)acryloyl group that appears in the vicinity of 1635 $cm^{-1}$ in the Raman spectrum is not observed). The solid content is 20% by mass.

(C-2) "GL-02R" (trade name) manufactured by Kyoeisha Chemical Co., Ltd. A copolymer having a structure in which a silicone side chain is added to an acrylic backbone. The copolymer has a (meth)acryloyl group. The solid content is 20% by mass.

(D) Compound having two or more isocyanate groups per molecule

(D-1) A biuret of hexamethylene diisocyanate "No. 21 curing agent" (trade name) manufactured by NATOCO Co., Ltd. The number of isocyanate groups per unit amount is 3.24 mol/Kg.

(E) Other component

(E-1) Methyl ethyl ketone.

Film substrates

(α-1) A gray colored PETG-based resin film "SET791 FZ26629" (trade name) manufactured by RIKEN TECHNOS CORPORATION. The thickness is 250 μm, and the 60-degree gloss value on the surface for forming a hard coat is 30%.

(α-2) A white colored polybutylene terephthalate-based resin film "HR (WHT)" (trade name) manufactured by RIKEN TECHNOS CORPORATION. The thickness is 250 μm, and the 60-degree gloss value on the surface for forming a hard coat is 30%.

(α-3) A resin film having a thickness of 250 μm formed from a mixture of 50 parts by mass of the following (β-1) and 50 parts by mass of the following (β-2) with the use of an apparatus equipped with a T-die, an extruder, and a winding machine having a mechanism for nipping with a chill roll and a surface rubber roll under the conditions of a resin temperature at the exit of the T-die of 270°C and a chill roll temperature of 50°C. The 60-degree gloss value on the surface for forming a hard coat is 1%.

(β-1) An amorphous aromatic polyester-based resin "KODAR PETG GS1" (trade name) manufactured by Eastman Chemical Company.

(β-2) A polybutylene terephthalate-based resin "TORAYCON 1200M" (trade name) manufactured by Toray Industries, Inc.

Example 1

1. Preparation of coating material

100 parts by mass of the component (A-1), 36 parts by mass of the component (B-1), 9 parts by mass of the component (C-1) (1.8 parts by mass in terms of solid content; the value in terms of solid content is shown in the following table), 37 parts by mass of the component (D-1), and 150 parts by mass of the component (E-1) were mixed and stirred to obtain a coating material. The ratio (d/a) between the number (a) of the hydroxyl groups derived from component (A) and the number (d) of the isocyanate groups derived from component (D) is calculated to be 1.35 from the types of the raw materials used and the mixing ratio of them.

2. Production of decorative sheet

On the surface for forming a hard coat of the film substrate (α-1), a printed layer with a wood grain pattern having a thickness of 1 μm was formed using an ink containing a vinyl chloride/vinyl acetate copolymer as a medium, and furthermore, the coating material obtained above was applied, dried, and cured using a coating apparatus by a Meyer bar method so that the coating amount (mass after curing) was 5 g/$m^2$ to form a hard coat and obtain a decorative sheet.

3. Evaluation of decorative sheet

The above-mentioned tests (i) to (viii) were performed to measure and evaluate the physical properties of the decorative sheet. The results are shown in Table 1. Furthermore, in the vicinity of the center in the transverse direction of the decorative sheet, the 60-degree gloss values were measured at 20 locations at intervals of 100 m in the machine direction in accordance with the method in the above-mentioned test (i), and the standard deviation of the 60-degree gloss values was determined from the obtained 20 measurement values. The standard deviation was 0.30, so that the matte property can be evaluated to be stable. Similarly, in the vicinity of the center in the transverse direction of the decorative sheet, a mandrel test was performed at 20 locations at intervals of 100 m in the machine direction in accordance with the method in the above-mentioned test (vi), and the standard deviation of the results of the mandrel test was determined from the obtained 20 measurement values. The standard deviation was 0.92, so that this property can be also evaluated to be stable.

Examples 2 to 15

A decorative sheet was obtained in the same manner as in Example 1 except that the formulation of the coating material was changed as shown in any one of Tables 1 to 3. The above-mentioned tests (i) to (viii) were performed to measure and evaluate the physical properties of these decorative sheets. The results are shown in any one of Tables 1 to 3. In addition, as the amounts of component (C), the values in terms of solid content are shown in the following tables. Hereinafter, the same applies.

Examples 16, 17

A decorative sheet was obtained in the same manner as in Example 1 except that the coating amount of the coating material was changed as shown in Table 3. The above-mentioned tests (i) to (viii) were performed to measure and evaluate the physical properties of these decorative sheets. The results are shown in Table 3.

Examples 18, 19

A decorative sheet was obtained in the same manner as in Example 1 except that the film substrate for use was changed as shown in Table 3. The above-mentioned tests (i) to (viii) were performed to measure and evaluate the physical properties of these decorative sheets. The results are shown in Table 3.

Example 20

A decorative sheet was obtained in the same manner as in Example 1 except that the amount in (B-1) described above was changed to 12 parts by mass and the film substrate for use was changed to (α-3) described above. The above-mentioned tests (i) to (viii) were performed to measure and evaluate the physical properties of the decorative sheet. The results are shown in Table 3.

Example 21

A decorative sheet was obtained in the same manner as in Example 1 except that the amount in (B-1) described above was changed to 12 parts by mass, the film substrate for use was changed to (α-3) described above, and the coating amount of the coating material was changed to 2 g/$m^2$. The above-mentioned tests (i) to (viii) were performed to measure and evaluate the physical properties of the decorative sheet. The results are shown in Table 3.

Table 1

| | | Ex.1 | Ex.2 | Ex.3 | Ex.4 | Ex.5 | Ex.6 | Ex.7 |
|---|---|---|---|---|---|---|---|---|
| Formulation (part by mass) | A-1 | 100 | - | - | - | 100 | 100 | 100 |
| | A-2 | - | 100 | - | - | - | - | - |
| | A-3 | - | - | 100 | - | - | - | - |
| | A-4 | - | - | - | 100 | - | - | - |
| | B-1 | 36 | 36 | 36 | 36 | 70 | 20 | - |
| | B-2 | - | - | - | - | - | - | - |
| | B-3 | - | - | - | - | - | - | - |
| | C-1 | 1.8 | 1.8 | 1.8 | 1.8 | 1.8 | 1.8 | 1.8 |
| | C-2 | - | - | - | - | - | - | - |
| | D-1 | 37 | 20 | 39 | 36 | 37 | 37 | 37 |
| | E-1 | 150 | 140 | 150 | 150 | 170 | 140 | 120 |
| Ratio d/a | | 1.35 | 1.40 | 1.39 | 1.31 | 1.35 | 1.35 | 1.35 |
| Coating amount g/$m^2$ | | 5 | 5 | 5 | 5 | 5 | 5 | 5 |
| Film substrate | | α-1 | α-1 | α-1 | α-1 | α-1 | α-1 | α-1 |
| Evaluation results | 60-degree gloss value % | 8 | 8 | 8 | 8 | 5 | 15 | 85 |
| | Oleic acid contact angle deg | 50 | 48 | 50 | 45 | 55 | 43 | 40 |
| | Oil repellency after wiping deg | 45 | 40 | 45 | 36 | 48 | 38 | 33 |
| | Nail scratch | ◎ | ○ | ◎ | × | ○ | ◎ | △ |
| | Finger slidability | ◎ | ◎ | ◎ | ◎ | ◎ | ◎ | × |
| | Mandrel test mm | 2 | 2 | 4 | 2 | 2 | 2 | 3 |
| | Formability 1 | A | A | C | A | B | A | B |
| | Formability 2 | A | A | B | A | A | A | A |

Table 2

| | | Ex.8 | Ex.9 | Ex.10 | Ex.11 | Ex.12 | Ex.13 | Ex.14 |
|---|---|---|---|---|---|---|---|---|
| Formulation (part by mass) | A-1 | 100 | 100 | 100 | 100 | 100 | 100 | 100 |
| | A-2 | - | - | - | - | - | - | - |
| | A-3 | - | - | - | - | - | - | - |
| | A-4 | - | - | - | - | - | - | - |
| | B-1 | - | - | 36 | 36 | 36 | 36 | 36 |
| | B-2 | 36 | - | - | - | - | - | - |
| | B-3 | - | 36 | - | - | - | - | - |
| | C-1 | 1.8 | 1.8 | 1.0 | 0.5 | - | - | 1.8 |
| | C-2 | - | - | - | - | - | 1.8 | - |
| | D-1 | 37 | 37 | 37 | 37 | 37 | 37 | 20 |
| | E-1 | 150 | 150 | 150 | 150 | 150 | 150 | 180 |
| Ratio d/a | | 1.35 | 1.35 | 1.35 | 1.35 | 1.35 | 1.35 | 0.72 |
| Coating amount g/$m^2$ | | 5 | 5 | 5 | 5 | 5 | 5 | 5 |
| Film substrate | | α-1 | α-1 | α-1 | α-1 | α-1 | α-1 | α-1 |
| Evaluation results | 60-degree gloss value % | 10 | 12 | 8 | 8 | 8 | 8 | 8 |
| | Oleic acid contact angle deg | 50 | 45 | 42 | 34 | 12 | 50 | 52 |
| | Oil repellency after wiping deg | 45 | 40 | 36 | 27 | 11 | 21 | 37 |
| | Nail scratch | ◎ | ○ | ○ | ○ | △ | ◎ | ○ |
| | Finger slidability | △ | ◎ | ◎ | ○ | × | ◎ | ◎ |
| | Mandrel test mm | 2 | 2 | 2 | 2 | 2 | 2 | 2 |
| | Formability 1 | A | A | A | A | A | A | A |
| | Formability 2 | A | A | A | A | A | A | A |

Table 3

| | | Ex.15 | Ex.16 | Ex.17 | Ex.18 | Ex.19 | Ex.20 | Ex.21 |
|---|---|---|---|---|---|---|---|---|
| Formulation (part by mass) | A-1 | 100 | 100 | 100 | 100 | 100 | 100 | 100 |
| | A-2 | - | - | - | - | - | - | - |
| | A-3 | - | - | - | - | - | - | - |
| | A-4 | - | - | - | - | - | - | - |
| | B-1 | 36 | 36 | 36 | 36 | 36 | 12 | 12 |
| | B-2 | - | - | - | - | - | - | - |
| | B-3 | - | - | - | - | - | - | - |
| | C-1 | 1.8 | 1.8 | 1.8 | 1.8 | 1.8 | 1.8 | 1.8 |
| | C-2 | - | - | - | - | - | - | - |
| | D-1 | 49 | 37 | 37 | 37 | 37 | 37 | 37 |
| | E-1 | 150 | 150 | 150 | 150 | 150 | 150 | 150 |
| Ratio d/a | | 1.80 | 1.35 | 1.35 | 1.35 | 1.35 | 1.35 | 1.35 |
| Coating amount g/$m^2$ | | 5 | 3 | 7 | 5 | 5 | 5 | 2 |
| Film substrate | | α-1 | α-1 | α-1 | α-2 | α-3 | α-3 | α-3 |
| Evaluation results | 60-degree gloss value % | 9 | 10 | 5 | 8 | 8 | 15 | 12 |
| | Oleic acid contact angle deg | 48 | 40 | 53 | 51 | 50 | 51 | 46 |
| | Oil repellency after wiping deg | 44 | 32 | 47 | 46 | 45 | 46 | 38 |
| | Nail scratch | ◎ | ○ | ◎ | ◎ | ◎ | ◎ | △ |
| | Finger slidability | ◎ | ◎ | ◎ | ◎ | ◎ | ◎ | ◎ |
| | Mandrel test mm | 4 | 2 | 3 | 2 | 2 | 2 | 2 |
| | Formability 1 | B | A | B | D | A | A | A |
| | Formability 2 | B | A | A | D | A | A | A |

The decorative sheet having the hard coat formed from the coating material according to the present invention has a good matte design. Furthermore, the decorative sheet having the preferable hard coat formed from the coating material according to the present invention can be expected to have good anti-stain property from the results of oleic acid contact angle and oil repellency after wiping. Furthermore, the decorative sheet having the preferable hard coat formed from the coating material according to the present invention can be applied to a decorative makeup of an adherend having a complicated curved surface.

REFERENCE SIGNS LIST

1 Hard coat
2 Resin particles having an average particle diameter of 0.5 to 20 μm
3 Printed layer
4 Layer of thermoplastic resin film

5 Pressure-sensitive adhesive layer

## Claims

**1.** A coating material comprising:

100 parts by mass of (A) an acrylic curable resin;
5 to 200 parts by mass of (B) resin particles having an average particle diameter of 0.5 to 20 $\mu$m;
0.05 to 20 parts by mass of (C) a silicone/acrylic copolymer oil-repellent agent; and
1 to 100 parts by mass of (D) a compound having two or more isocyanate groups per molecule.

**2.** The coating material according to claim 1, wherein the acrylic curable resin (A) comprises:

a structural unit derived from a hydroxyl-group-containing (meth)acrylic acid ester (a1);
a structural unit derived from a vinyl aromatic compound (a2); and
a structural unit derived from a (meth)acrylic acid alkyl ester (a3),
wherein the acrylic curable resin (A) comprises 5 to 40 mol% of the structural unit derived from a hydroxyl-group-containing (meth)acrylic acid ester (a1) based on 100 mol% of a total of the structural units derived from all constituent monomers.

**3.** The coating material according to claim 2, wherein the acrylic curable resin (A) comprises 10 to 50 mol% of the structural unit derived from a vinyl aromatic compound (a2) based on 100 mol% of the total of the structural units derived from all the constituent monomers.

**4.** The coating material according to claim 2 or 3, wherein the acrylic curable resin (A) comprises 20 to 85 mol% of the structural unit derived from a (meth)acrylic acid alkyl ester (a3) based on 100 mol% of the total of the structural units derived from all the constituent monomers.

**5.** The coating material according to any one of claims 1 to 4, wherein the acrylic curable resin (A) comprises:

a structural unit derived from a hydroxyl-group-containing (meth)acrylic acid ester (a1);
a structural unit derived from a vinyl aromatic compound (a2);
a structural unit derived from methacrylic acid methyl ester (a3-1); and
a structural unit derived from an aliphatic alkyl ester of a (meth)acrylic acid, the aliphatic alkyl moiety having 4 or more carbon atoms (a3-2).

**6.** The coating material according to claim 5, wherein the acrylic curable resin (A) comprises 10 to 50 mol% of the structural unit derived from methacrylic acid methyl ester (a3-1) based on 100 mol% of a total of the structural units derived from all constituent monomers.

**7.** The coating material according to claim 5 or 6, wherein the acrylic curable resin (A) comprises 5 to 40 mol% of the structural unit derived from an aliphatic alkyl ester of a (meth)acrylic acid, the aliphatic alkyl moiety having 4 or more carbon atoms (a3-2) based on 100 mol% of the total of the structural units derived from all the constituent monomers.

**8.** An article comprising a hard coat formed from the coating material according to any one of claims 1 to 7.

**9.** A decorative sheet comprising a hard coat formed from the coating material according to any one of claims 1 to 7.

**10.** A decorative sheet comprising:

a first hard coat; and
a layer of a film substrate in order from a surface layer side, wherein the first hard coat is formed from a coating material containing:

(A) an acrylic curable resin;
(B) resin particles having an average particle diameter of 0.5 to 20 $\mu$m;
(C) a silicone/acrylic copolymer oil-repellent agent; and

(D) a compound having two or more isocyanate groups per molecule,

wherein the requirements (i) and (ii) are fulfilled:

(i) the first hard coat of the decorative sheet has a 60-degree gloss value of 15% or less on a surface of the coat; and
(ii) the first hard coat of the decorative sheet has an oleic acid contact angle of 25 degrees or more on a surface of the coat.

**11.** The decorative sheet according to claim 10, wherein the requirement (iii) is further fulfilled:
(iii) the first hard coat of the decorative sheet has an oleic acid contact angle of 20 degrees or more on a surface of the coat after the surface is wiped 10 times back and forth with a cotton containing methanol.

**12.** The decorative sheet according to claim 10 or 11, comprising:

the first hard coat; a second hard coat; and the layer of a film substrate in order from the surface layer side, wherein the second hard coat is formed from a coating material containing:

(A) an acrylic curable resin;
(B) resin particles having an average particle diameter of 0.5 to 20 μm; and
(D) a compound having two or more isocyanate groups per molecule.

**13.** The decorative sheet according to any one of claims 10 to 12, comprising:

the first hard coat; a second hard coat; a third hard coat; and the layer of a film substrate in order from the surface layer side,
wherein the third hard coat is formed from a coating material containing:

(A) an acrylic curable resin;
(B) resin particles having an average particle diameter of 0.5 to 20 μm; and
(D) a compound having two or more isocyanate groups per molecule.

**14.** An article comprising the decorative sheet according to any one of claims 9 to 13.

FIG.1

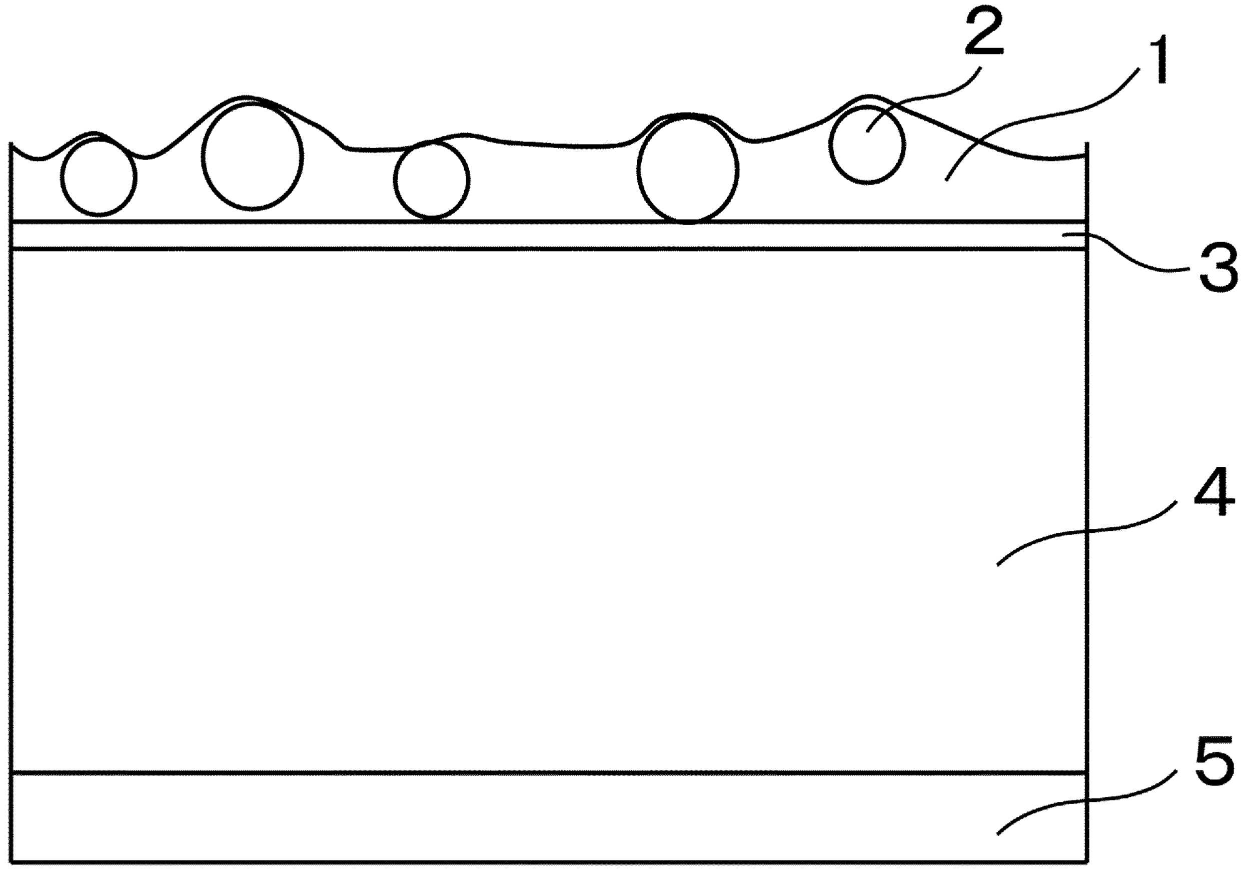

FIG.2

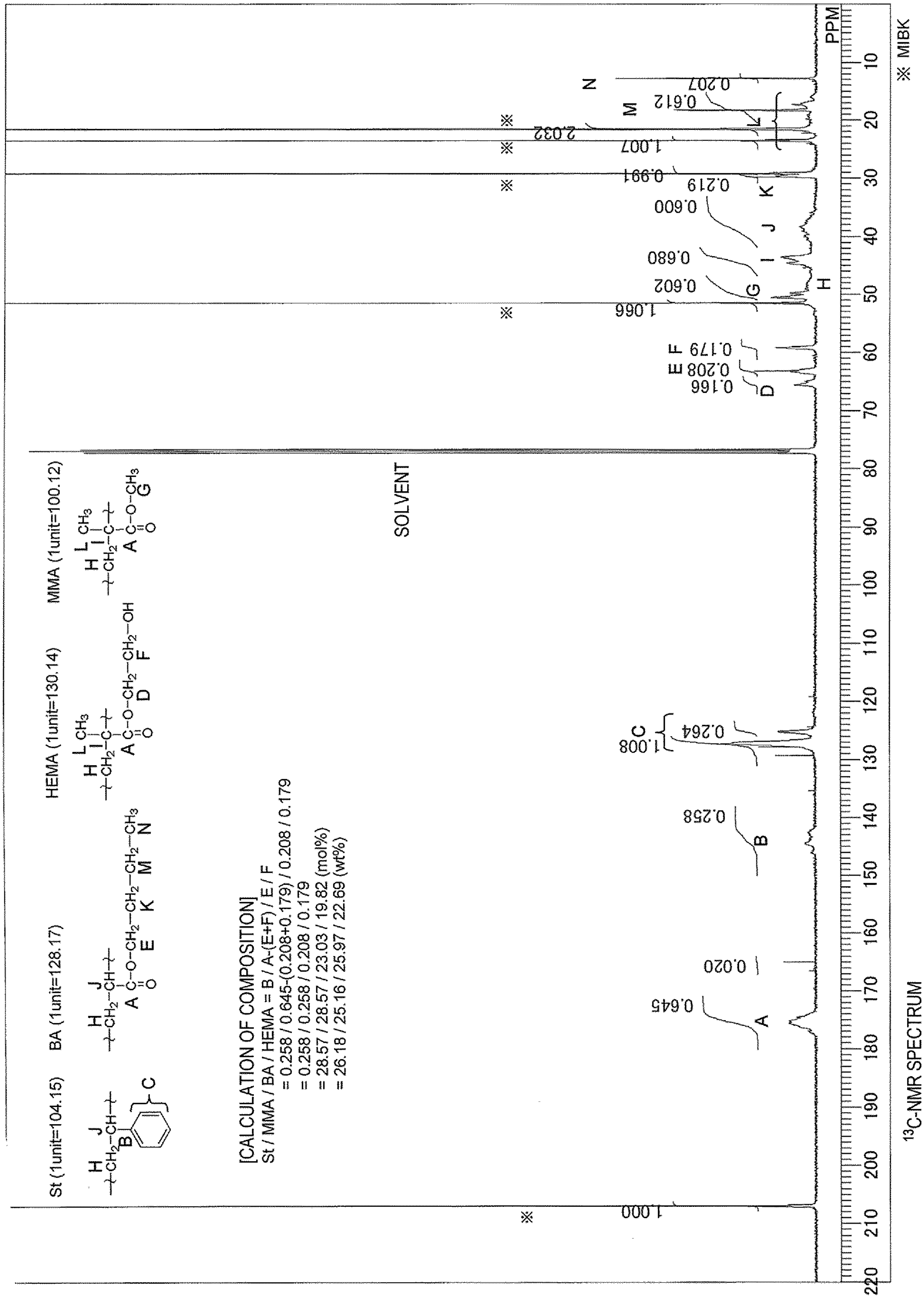
St (1unit=104.15)
BA (1unit=128.17)
HEMA (1unit=130.14)
MMA (1unit=100.12)
[CALCULATION OF COMPOSITION]
St / MMA / BA / HEMA = B / A-(E+F) / E / F
= 0.258 / 0.645-(0.208+0.179) / 0.208 / 0.179
= 0.258 / 0.258 / 0.208 / 0.179
= 28.57 / 28.57 / 23.03 / 19.82 (mol%)
= 26.18 / 25.16 / 25.97 / 22.69 (wt%)
SOLVENT
PPM
※ MIBK
13C-NMR SPECTRUM

FIG.3

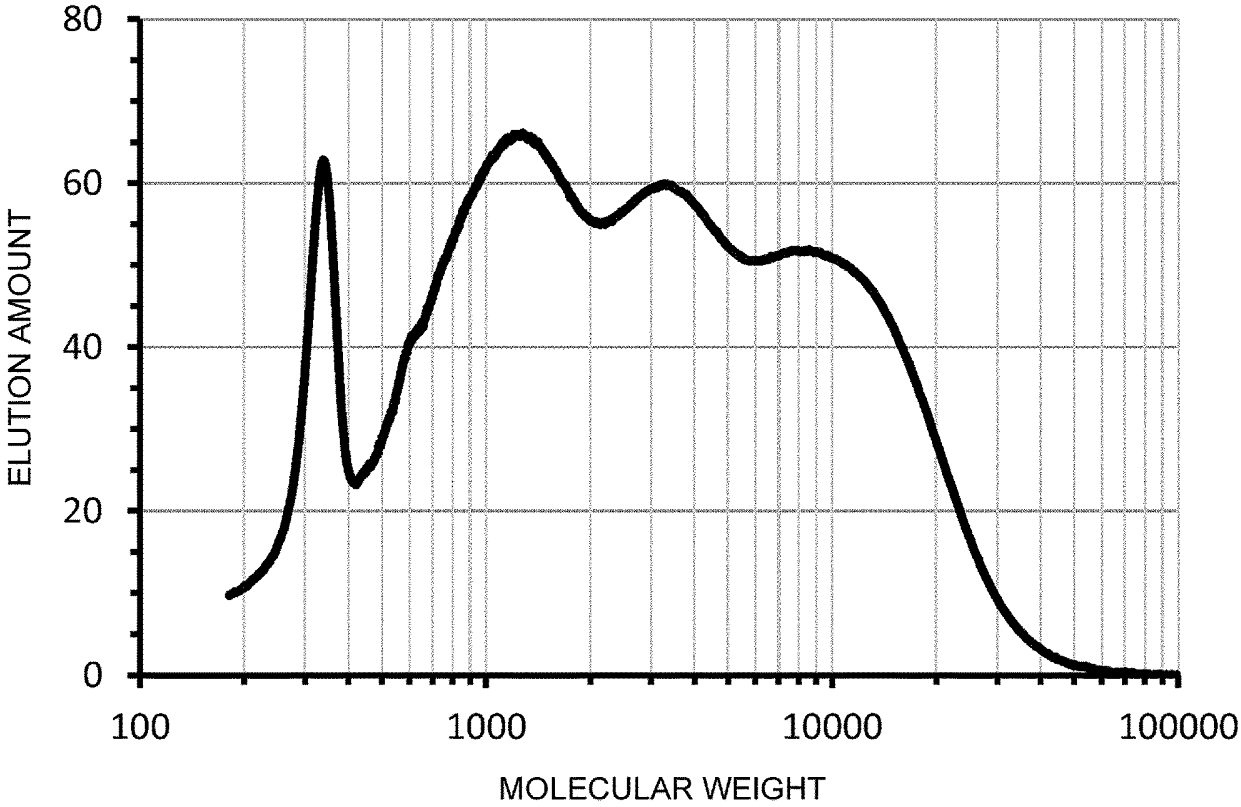
80
60
40
20
0
ELUTION AMOUNT
100
1000
10000
100000
MOLECULAR WEIGHT

FIG.4

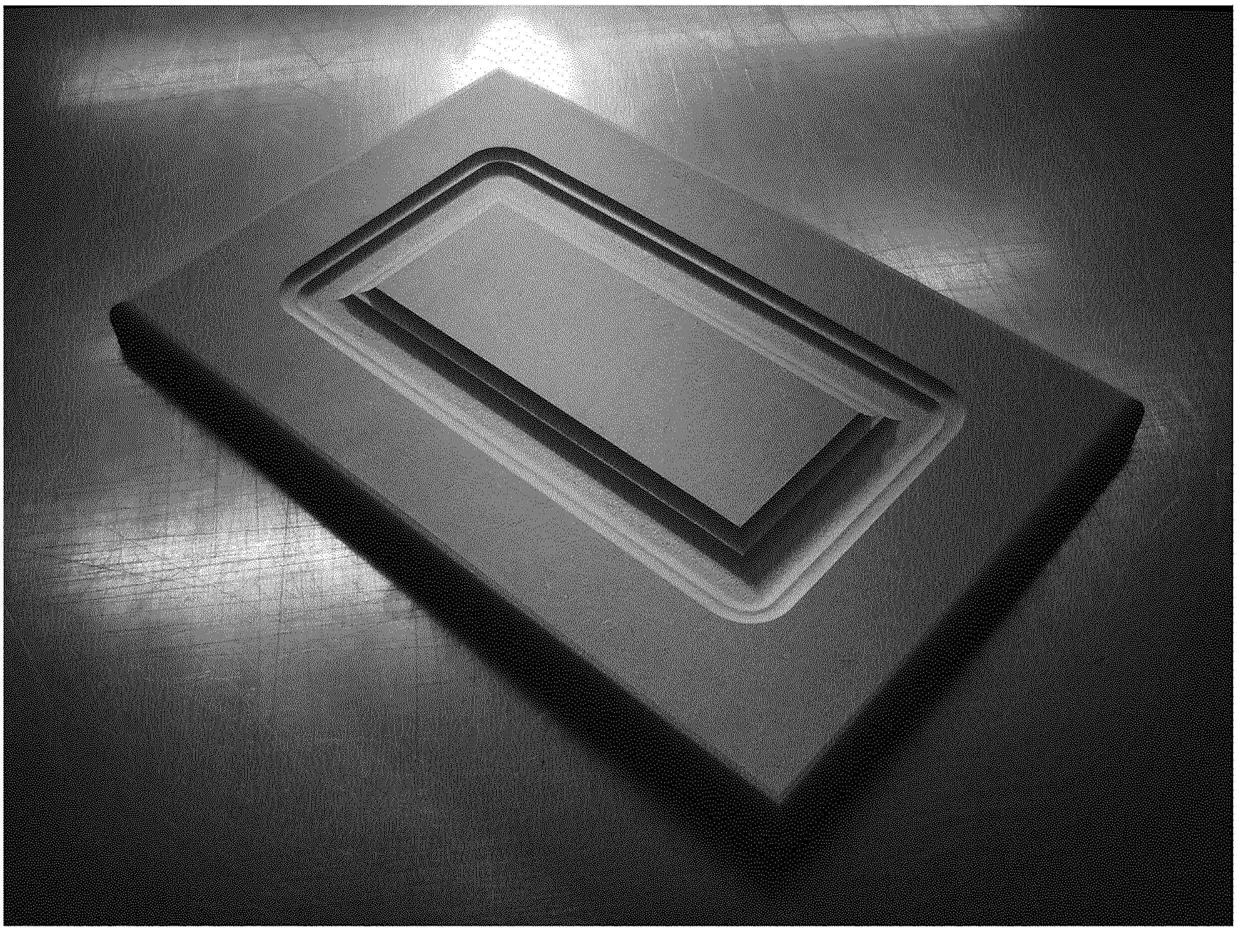

**INTERNATIONAL SEARCH REPORT**

International application No. PCT/JP2018/034737

A. CLASSIFICATION OF SUBJECT MATTER

Int. Cl. C09D133/14(2006.01)i, B32B27/00(2006.01)i, B32B27/30(2006.01)i, C09D5/28(2006.01)i, C09D7/65(2018.01)i, C09D125/02(2006.01)i, C09D133/08(2006.01)i, C09D175/04(2006.01)i, C09D183/00(2006.01)i

According to International Patent Classification (IPC) or to both national classification and IPC

B. FIELDS SEARCHED

Minimum documentation searched (classification system followed by classification symbols)

Int. Cl. C09D133/14, B32B27/00, B32B27/30, C09D5/28, C09D7/65, C09D125/02, C09D133/08, C09D175/04, C09D183/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | JP 2015-105297 A (KANSAI PAINT CO., LTD.) 08 June 2015, claims, paragraphs [0001]-[0009], [0036], examples, (in particular, example 6) & CN 104673073 A | 1-14 |
| Y | JP 2015-203807 A (LINTEC CORP.) 16 November 2015, claims, examples (Family: none) | 1-14 |
| Y | WO 2016/147733 A1 (RIKEN TECHNOS CORP.) 22 September 2016, claims, examples & US 2018/0065349 A1, claims, examples & JP 2016-172422 A & EP 3272527 A1 & CN 107405901 A & KR 10-2017-0128329 A | 1-14 |

☒ Further documents are listed in the continuation of Box C. ☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 25.10.2018 | 06.11.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/034737

C (Continuation). DOCUMENTS CONSIDERED TO BE RELEVANT

| Category* | Citation of document, with indication, where appropriate, of the relevant passages | Relevant to claim No. |
|---|---|---|
| A | WO 2016/020978 A1 (ORIGIN ELECTRIC CO., LTD.) 11 February 2016, claims, examples & US 2017/0218220 A1, claims, examples & CN 106661376 A | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015066731 A


### Non-patent literature cited in the description


- Polymer Analysis Handbook. first press, 20 September 2008
- The Japan Society for Analytical Chemistry, Polymer Analysis Research Council. Asakura Publishing Co., Ltd
- **SADAO MORI.** Size Exclusion Chromatography, High-Performance Liquid Chromatography of Polymers. first press, 10 December 1991
- Analysis of the surface modificated multifunctional polyacrylates by Laser Raman microscopy. **YOSHINORI KIMATA ; TAKASHI TSUDA.** Toagosei Group Research Annual Report TREND. 2016, 3-1, 6